(19) Europäisches Patentamt
European Patent Office
Office européen des brevets

(11) EP 2 700 510 B1

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **12181439.6**

(22) Anmeldetag: **23.08.2012**

(51) Int Cl.:
***B42D 15/00*** *(2006.01)*
***B26F 1/24*** *(2006.01)*
***G03H 1/00*** *(2006.01)*
***G03H 1/02*** *(2006.01)*
***B42D 25/42*** *(2014.01)*
***B42D 25/29*** *(2014.01)*
***B42D 25/328*** *(2014.01)*

(54) **Polycarbonatbasierte Sicherheits- und/oder Wertdokumente mit Hologramm im Kartenkörper**

Polycarbonate-based security and/or valuable document with a hologram in the card body

Documents de valeur et/ou de sécurité à base de polycarbonate avec hologramme dans le corps de la carte

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.02.2014 Patentblatt 2014/09**

(73) Patentinhaber: **Bayer MaterialScience AG**
**51373 Leverkusen (DE)**

(72) Erfinder:
- **Weiser, Marc-Stephan, Dr.**
  **51377 Leverkusen (DE)**
- **Tziovaras, Georgios**
  **42275 Wuppertal (DE)**
- **Fäcke, Thomas, Dr.**
  **51375 Leverkusen (DE)**
- **Bruder, Friedrich-Karl, Dr.**
  **47802 Krefeld (DE)**
- **Hönel, Dennis**
  **53909 Zülpich-Wichterich (DE)**
- **Berneth, Horst, Dr.**
  **51373 Leverkusen (DE)**
- **Rölle, Thomas, Dr.**
  **51381 Leverkusen (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A2- 0 003 187**
**DE-A1-102007 052 948**
**US-A- 3 279 826**

EP 2 700 510 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Sicherheits- und/oder Wertdokument umfassend wenigstens eine Schicht (A1) enthaltend wenigstens ein Poly- oder Copolycarbonat, wenigstens eine weitere Schicht (A2) enthaltend wenigstens ein Poly- oder Copolycarbonat und wenigstens eine Schicht (P) enthaltend wenigstens ein Photopolymer, in die ein Hologramm eingebracht ist, wobei die Schicht (P) teilflächig zwischen den Schichten A1 und A2 angeordnet ist und die Schichten A1 und A2, von denen wenigstens eine Schicht transparent ausgebildet ist, zumindest abschnittsweise miteinander verbunden sind sowie ein Verfahren zur Herstellung solcher Sicherheits- und/oder Wertdokumente.

Auf dem Markt der Sicherheits- und/oder Wertdokument, insbesondere Identifikations-Dokumente (ID-Dokumente) besteht der Bedarf an kontinuierlicher Verbesserung der verwendeten Sicherheitsmerkmale sowie Entwicklung neuer Sicherheitsmerkmale um potentiellen Fälschern immer einen Schritt voraus zu sein. Die Sicherheitsmerkmale sollen so gestaltet sein, dass eine Fälschung technisch schwierig und rein visuell möglichst einfach zu identifizierten ist.

Die Verwendung von Hologrammen in Sicherheits- und Wertdokumenten ist seit vielen Jahren ein beliebtes Mittel um die Fälschungssicherheit dieser Dokumente zu erhöhen. Dabei werden die Hologramme üblicherweise mittels Heißprägen auf die Dokumente aufgeklebt. Bei den verwendeten Holgrammen handelt es sich zum Großteil um Prägehologramme, welche auf der Rückseite mit einem wärmeaktivierbaren Kleber versehen sind. Beim Heißprägevorgang wird der Kleber durch die Wärme des Prägestempels aktiviert, das Hologramm verbindet sich mit dem Dokument und kann dann von seiner Trägerfolie gelöst werden.

Prägehologramme selbst werden in einem Prägeschritt aus einer Präzisionsform (Nickelshim) in einen thermoplastischen Kunststoff eingeformt. Derartige Oberflächenhologramme haben typischerweise eine Prägedicke von weniger als einem Mikrometer. Die Art dieser Hologramme begrenzt deren Lichteffizienz bei ca. 30%. Aus diesem Grund werden diese meisten nachträglich metallisiert oder gleich in metallisierten Folien eingeprägt, um deren visuelle Sichtbarkeit zu erhöhen. Zudem zeigen diese Hologramme ein "Regenbogen" artiges polychromatisches Farbbild. Um die Fälschungssicherheit der Dokumente und auch die Lebensdauer der Hologramme zu erhöhen, werden Hologramme auch in Dokumenten aus Kunststoff einlaminiert. Dabei werden die Hologramme auf den innenliegenden Folien aufgeprägt, und dann mit transparenten Folien überdeckt, um deren Sichtbarkeit zu gewährleisten. Die Fälschungssicherheit von Prägehologrammen ist aber nicht besonders hoch. Zudem bilden in der Regel besser sichtbare metallisierte Prägehologramme in Dokumenten aus Kunststoff signifikante Schwachstellen.

In jüngster Zeit werden zudem auch eine neue Klasse an Hologrammen in Sicherheitskarten verwendet, die sich durch ihre hohe optische Effizienz (Beugungseffizienz > 90%) und durch ihre einheitliche und eindeutig definierbare Farbigkeit auszeichnen. Man nennt diese Hologramme Volumenhologramme, da deren diffraktive Struktur in die gesamte Schichtdicke (typischerweise 10 - 20 $\mu$m) eingeschrieben wurde. Volumenhologramme zeigen ein ausgeprägt winkelabhängiges Lichtbeugungsverhalten. So sind diese unter bestimmten Winkeln durchsichtig (off Bragg) und unter anderen deutlich sichtbar (on Bragg). Zur Herstellung derartiger Hologramme werden spezielle Photopolymer-Formulierungen eingesetzt. In WO-A 2011/054797 und WO 2011/067057 sind beispielsweise solche speziellen Photopolymer-Formulierungen zur Herstellung von holographischen Medien beschrieben. Solche Photopolymerformulierungen mit hoher Brechungsindexdifferenz können, wie in WO-A 2011/054797 und WO 2011/067057 beschrieben, auf eine transparente Substratfolie aufgebracht werden.

Um Hologramme in Sicherheits- und/oder Wertdokumente, insbesondere in Körper von ID-Karten zu integrieren, ist als möglicher Prozess eine Verklebung mit entweder einer flüssigen Klebstoffformulierung oder -dispersion oder einer Klebefolie denkbar.

Aus DE 10 20040 12787 A1 ist bekannt, dass Volumenhologramme in ID-Karten integriert werden können, so dass eine Wellenlängenverschiebung des Volumenhologramms auftritt. Dieses Verfahren wird zur nachträglichen Individualisierung genutzt, ermöglicht aber keine Wiedergabe des Hologramms in seinen Originalfarben und ist daher für das Einbringen von "True Colour" (Echtfarben-)Hologrammen ungeeignet.

Da das beschriebene Verfahren auch zu einer unscharfen Wiedergabe des Hologramms führt, werden heutzutage Hologramme in der Regel auf den vorgefertigten Kartenkörper geklebt wie in den Schriften DE 10 2006 048464 A1 und WO 2008/043356 A1 beschrieben. Da ein solches Hologramm jedoch außen liegt und nicht vollständig in den verschmolzenen Kartenkörper integriert ist, ermöglicht es immer noch einen Angriff eines Fälschers. Die Verklebung wird zur potentiellen Schwachstelle des Kartenverbunds. Zudem können lediglich aufgeklebte Hologramme leicht zerstörungsfrei vom Kartenkörper entfernt und zur Kennzeichnung gefälschter Dokumente verendet werden.

Bei der Herstellung von Sicherheits- und/oder Wertdokumenten, insbesondere Identifikationsdokumenten in Form von Karten (ID-Karten), besteht der Bedarf, die Fälschungssicherheit mittels Sicherheitsmerkmalen, wie z.B. Hologrammen, weiter zu erhöhen. Eine solche Verwendung von Hologrammen als Sicherheitsmerkmalen ist aber nur sinnvoll, wenn die Hologramme in den Kartenkörper integriert werden können und nicht lediglich - wie vorangehend beschrieben - auf den Kartenkörper aufgeklebt werden.

Sicherheits- und/oder Wertdokumente auf Kunststoffbasis, insbesondere Identifikations-Dokumente, wie z.B. ID-Karten, werden heutzutage vorzugsweise ohne den Einsatz von Klebstoffschichten als Mehrschichtverbunde mittels

Lamination bei hohen Temperaturen und Druck hergestellt, um ein nachträgliches Auftrennen der Schichtaufbauten zum Austausch von Identifikationsmerkmalen zu verhindern. In diese Mehrschichtverbunde werden vor oder während des Laminierprozesses die entsprechenden Sicherheitsmerkmale eingebracht, die folglich derart gestaltet sein müssen, dass sie den Laminierprozessparametern zerstörungsfrei standhalten. Zudem dürfen durch die Sicherheitsmerkmale keine Schwachstellen in den Mehrschichtverbund eingebracht werden, die ein zerstörungsfreies nachträgliches Öffnen des Verbundes wieder ermöglichen würden.

Auch bei der Integration in den Kartenkörper muss daher sichergestellt sein, dass das Hologramm keine Schwachstelle in den Mehrschichtverbund bringt und der Kartenkörper nicht ohne Zerstörung des Hologramms aufgetrennt und das Hologramm entfernt und zur Kennzeichnung eines gefälschten Dokuments verwendet werden kann.

In WO-A 2012/019588 ist beispielsweise beschrieben, dass ein Sicherheitselement, z.B. ein Hologramm, mit Reaktivklebstoffen in die Mitte eines Kartenverbundes geklebt werden muss. Dies erfordert jedoch einen zusätzlichen Prozessschritt, passgenaue Positionierung beim anschließenden Laminierprozess und umgeht nicht die Verklebung als potentielle Schwachstelle des Kartenverbunds.

Das Dokument DE 10 2007 052948 offenbart ein Sicherheitspapier mit den Merkmalen des Oberbegriffs des Anspruchs 1.

Es bestand demnach weiterhin Bedarf nach einer einfachen Möglichkeit, Hologramme als Sicherheitsmerkmale in Sicherheits- und/oder Wertdokumente, insbesondere Identifikationsdokumente, zu integrieren, ohne dass es zu den genannten Nachteilen kommt. Dabei soll eine scharfe Wiedergabe des Hologramms in Echtfarben erreicht werden, ohne dass das Hologramm durch Auftrennen des Dokumentes zerstörungsfrei entfernt werden kann.

Die Aufgabe, die der vorliegenden Erfindung zugrunde lag bestand demnach darin, eine solche einfache Möglichkeit, Hologramme als Sicherheitsmerkmale in Sicherheits- und/oder Wertdokumente, insbesondere Identifikationsdokumente, zu integrieren, aufzufinden. Diese Aufgabe wurde bei einem Sicherheits- und/oder Wertdokument der eingangs genannten Art dadurch gelöst, das die Schicht P an verschiedenen Stellen Aussparungen aufweist und die beiden Schichten A1 und A2 an diesen Aussparungen zumindest abschnittsweise verbunden sind.

Durch diesen Aufbau wird gewährleistet, dass die Schichten A1 und A2 an den Stellen, an denen sich zwischen ihnen keine Schicht P befindet durch die abschnittsweise Verbindung einen monolithischen Schichtverbund bilden, der nachträglich nicht zerstörungsfrei aufgetrennt werden kann.

Gemäß einer bevorzugten Ausführungsform des erfindungsgemäßen Sicherheits- und/oder Wertdokuments ist vorgesehen, dass es wenigstens eine Schicht (K) aufweist, die wenigstens einen Kleber enthält.

Eine zusätzliche Klebeschicht zwischen Photopolymerschicht und wenigstens einer der Polycarbonatschichten kann zudem die Haftung zwischen der Schicht (P) und der Schicht A1 bzw. A2 verbessern und verhindern, dass das Hologram in der Schicht (P) in Kontakt mit der Polycarbonatschmelze beim Laminationsprozess eine Farbveränderung oder eine sonstige Zerstörung erleidet.

Geeignete Poly- oder Copolycarbonate für die Schichten A1 und A2 sind dem Fachmann bekannt. Ganz besonders bevorzugt sind Polycarbonate oder Copolycarbonate, insbesondere mit mittleren Molekulargewichten $M_w$ von 500 bis 100 000, bevorzugt von 10 000 bis 80 000, besonders bevorzugt von 15 000 bis 40 000 oder Blends enthaltend wenigstens ein solches Polycarbonat oder Copolycarbonat. Weiterhin bevorzugt sind auch Blends der vorgenannten Polycarbonate oder Copolycarbonate mit wenigstens einem Poly- oder Copolykondensat der Terephthalsäure, insbesondere wenigstens einem solchen Poly- oder Copolykondensat der Terephthalsäure mit mittleren Molekulargewichten $M_w$ von 10.000 bis 200.000, bevorzugt von 26.000 bis 120.000. In besonders bevorzugten Ausführungsformen der Erfindung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat um einen solchen mit 20 bis 85 Gew.-% Polycarbonat oder Copolycarbonat und 80 bis 15 Gew.-% Poly- oder Copolybutylenterephthalat, vorzugsweise mit 20 bis 85 Gew.-% Polycarbonat und 80 bis 15 Gew.-% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Poly- oder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan hergestellt werden.

Geeignete Kohlensäurederivate können beispielsweise Diarylcarbonate der allgemeinen Formel (II) sein,

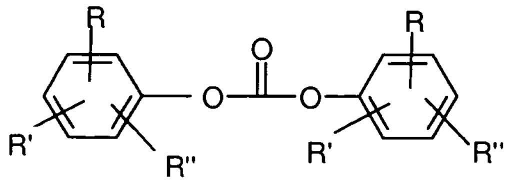

(II)

worin

R, R' und R" unabhängig voneinander gleich oder verschieden für Wasserstoff, lineares oder verzweigtes $C_1$-$C_{34}$-Alkyl, $C_7$-$C_{34}$-Alkylaryl oder $C_6$-$C_{34}$-Aryl stehen, R weiterhin auch -COO-R'" bedeuten kann, wobei R'" für Wasserstoff, lineares oder verzweigtes $C_1$-$C_{34}$-Alkyl, $C_7$-$C_{34}$-Alkylaryl oder $C_6$-$C_{34}$-Aryl steht.

Besonders bevorzugte Diarylverbindungen sind Diphenylcarbonat, 4-tert-Butylphenyl-phenylcarbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln,

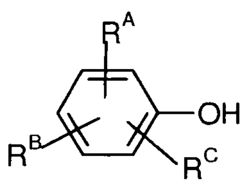

(III)

wobei

$R^A$ für lineares oder verzweigtes $C_1$-$C_{34}$-Alkyl, $C_7$-$C_{34}$-Alkylaryl, $C_6$-$C_{34}$-Aryl oder für -COO-$R^D$ steht, wobei $R^D$ für Wasserstoff, lineares oder verzweigtes $C_1$-$C_{34}$-Alkyl, $C_7$-$C_{34}$-Alkylaryl oder $C_6$-$C_{34}$-Aryl steht, und

$R^B$, $R^C$ unabhängig voneinander gleich oder verschieden für Wasserstoff, lineares oder verzweigtes $C_1$-$C_{34}$-Alkyl, $C_7$-$C_{34}$-Alkylaryl oder $C_6$-$C_{34}$-Aryl stehen.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Wenigstens eine der beiden Schichten A1 oder A2 weist eine ausreichende Transparenz auf, damit das in der darunterliegenden Schicht P enthaltene Hologramm gut sichtbar ist. Bei der transparenten Schicht kann es sich um die A1 oder um die Schicht A2 handeln. Es können auch beide Schichten A1 und A2 transparent sein.

In einer bevorzugten Ausführungsform ist aber nur eine der beiden Schichten A1 oder A2 transparent und bei der anderen Schicht A1 oder A2 handelt es sich um eine transluzente, schwarze, weiße oder andersfarbige Schicht, bevorzugt um eine weiße Schicht.

Die transparenten Schichten A1 oder A2 können auch eingefärbt sein, bevorzugt mit in Polycarbonat löslichen Farbstoffen. Die Einfärbung muss jedoch so farbschwach erfolgen, dass das in der Schicht P enthaltene Hologramm weiterhin gut sichtbar bleibt.

Die Schichten A1 und A2 können unabhängig voneinander bevorzugt eine Schichtdicke von 30 $\mu$m bis 500 $\mu$m und besonders bevorzugt von 50 $\mu$m bis 300 $\mu$m.

Geeignete Photopolymer-Formulierungen für die Herstellung der Schicht P sind dem Fachmann ebenfalls bekannt und beispielsweise in WO-A 2011/054797 und WO 2011/067057 beschrieben.

Bevorzugt handelt es sich bei der Photopolymer-Formulierung für die Herstellung der Schicht P um eine solche umfassend eine Polyisocyanat-Komponente, eine isocyanatreaktive Komponente, wenigstens ein Schreibmonomer und wenigstens einen Photoinitiator.

Die Polyisocyanat-Komponente a) umfasst wenigstens eine organische Verbindung, die wenigstens zwei NCO-Gruppen aufweist (Polyisocyanat).

Als Polyisocyanat können alle dem Fachmann an sich gut bekannten Verbindungen oder deren Mischungen eingesetzt werden. Diese Verbindungen können auf aromatischer, araliphatischer, aliphatischer oder cycloaliphatischer Basis sein. In untergeordneten Mengen kann die Polyisocyanat-Komponente a) auch Monoisocyanate, d.h. organische Verbindungen mit einer NCO-Gruppe, und / oder ungesättigte Gruppen enthaltende Polyisocyanate umfassen..

Beispiele für geeignete Polyisocyanate sind Butylendiisocyanat, Hexamethylendiisocyanat (HDI), 2,2,4-Trimethylhexamethylendiisocyanat und dessen Isomere (TMDI), Isophorondiisocyanat (IPDI), 1,8-Diisocyanato-4-(isocyanatomethyl)-octan, die isomeren Bis-(4,4'-isocyanatocyclo-hexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und / oder 2,6-Toluylendiisocyanat, 1,5-Naphthylendiisocyanat, 2,4'- und / oder 4,4'-Diphenylmethandiisocyanat, Triphenylmethan-4,4',4"-triisocyanat oder beliebige Mischungen der vorgenannten Verbindungen.

Monomere Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen können ebenfalls verwendet werden.

Bevorzugt sind Polyisocyanate auf Basis aliphatischer und / oder cycloaliphatischer Di- oder Triisocyanate.

Besonders bevorzugt handelt es sich bei den Polyisocyanaten um di- oder oligomerisierte aliphatische und / oder cycloaliphatische Di- oder Triisocyanate.

Ganz besonders bevorzugte Polyisocyanate sind Isocyanurate, Uretdione und / oder Iminooxadiazindione basierend auf HDI, TMDI, 1,8-Diisocyanato-4-(isocyanatomethyl)-octan oder deren Mischungen.

Die Polyisocyanat-Komponente a) kann auch NCO-funktionelle Prepolymere umfassen oder daraus bestehen. Die Prepolymere können Urethan-, Allophanat-, Biuret- und / oder Amidgruppen aufweisen. Derartige Prepolymere sind beispielsweise durch Umsetzung von Polyisocyanaten a1) mit isocyanatreaktiven Verbindungen a2) erhältlich.

Als Polyisocyanate a1) eignen sich alle bekannten aliphatischen, cycloaliphatischen, aromatischen oder araliphatischen Di- und Triisocyanat. Daneben können auch die bekannten höhermolekularen Folgeprodukte monomerer Di- und / oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Polyisocyanat a1) eingesetzt werden können, sind Butylendiisocyanat, Hexamethylendiisocyanat, Isophorondiisocyanat, Trimethyl-hexamethylen-diisocyanat (TMDI), 1,8-Diisocyanato-4-(isocyanatomethyl)-octan, Isocyanatomethyl-l,8-octandiisocyanat (TIN), 2,4- und / oder 2,6-Toluendiisocyanat.

Als isocyanatreaktive Verbindungen a2) können bevorzugt OH-funktionelle Verbindungen verwendet werden. Dabei kann es sich insbesondere um Polyole handeln. Ganz besonders bevorzugt können als isocyanatreaktive Verbindung a2) die weiter unten beschriebenen Polyole der Komponente b) verwendet werden.

Es ist ebenfalls möglich, als isocyanatreaktive Verbindungen a2) Amine einzusetzen. Beispiele geeigneter Amine sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere, insbesondere mit zahlenmittleren Molmassen bis 10000 g/Mol. Mischungen der vorgenannten Amine können ebenfalls verwendet werden.

Bevorzugt ist auch, wenn die isocyanatreaktiven Verbindungen a2) eine zahlenmittlere Molmasse von ≥ 200 und ≤ 10000 g/Mol, weiter bevorzugt ≥ 500 und ≤ 8500 g/Mol und ganz besonders bevorzugt ≥ 1000 und ≤ 8200 g/Mol aufweisen.

Die Prepolymere der Polyisocyanat-Komponente a) können insbesondere einen Restgehalt an freiem monomerem Isocyanat < 1 Gew.-%, besonders bevorzugt <0,5 Gew.-% und ganz besonders bevorzugt < 0,2 Gew.-% aufweisen.

Die Polyisocyanat-Komponente a) kann auch Mischungen der vorgenannten Polyisocyanate und Prepolymere umfassen.

Es ist gegebenenfalls auch möglich, dass die Polyisocyanat-Komponente a) anteilsmäßig Polyisocyanate enthält, die teilweise mit isocyanat-reaktiven, ethylenisch ungesättigten Verbindungen umgesetzt sind. Bevorzugt werden hierbei als isocyanat-reaktive, ethylenisch ungesättigte Verbindungen α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind Acrylate und Methacrylate mit mindestens einer isocyanatreaktiven Gruppe.

Der Anteil der Polyisocyanate in der Polyisocyanat-Komponente a), der teilweise mit isocyanatreaktiven, ethylenisch ungesättigten Verbindungen umgesetzt ist, kann 0 bis 99 Gew.-%, bevorzugt 0 bis 50 Gew.-%, besonders bevorzugt 0 bis 25 Gew.-% und ganz besonders bevorzugt 0 bis 15 Gew.-% betragen.

Es ist gegebenenfalls auch möglich, dass die Polyisocyanat-Komponente a) vollständig oder anteilsmäßig Polyisocyanate enthält, die ganz oder teilweise mit aus der Beschichtungstechnologie bekannten Blockierungsmitteln umgesetzt sind. Beispiel für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder deren Mischungen.

Besonders bevorzugt ist, wenn die Polyisocyanat-Komponente a) ein aliphatisches Polyisocyanat oder ein aliphatisches Prepolymer und bevorzugt ein aliphatisches Polyisocyanat oder aliphatisches Prepolymer mit primären NCO-Gruppen umfasst oder daraus besteht.

Die isocyanatreaktive Komponente b) umfasst wenigstens eine organische Verbindung, die wenigstens zwei isocyanatreaktive Gruppen aufweist (isocyanatreaktive Verbindung). Im Rahmen der vorliegenden Erfindung werden als isocyanatreaktive Gruppen Hydroxy-, Amino- oder Thiogruppen angesehen.

Als isocyanatreaktive Komponente können alle Systeme eingesetzt werden, die im Mittel wenigstens 1,5 und bevorzugt 2 bis 3 isocyanatreaktive Gruppen aufweisen.

Geeignete isocyanatreaktive Verbindungen sind beispielsweise Polyester-, Polyether-, Polycarbonat-, Poly(meth)acrylat- und / oder Polyurethanpolyole.

Besonders geeignete Polyesterpolyole sind beispielsweise lineare oder verzweigte Polyesterpolyole, die aus aliphatischen, cycloaliphatischen oder aromatischen Di- bzw. Polycarbonsäuren bzw. ihren Anhydriden durch Umsetzung mit mehrwertigen Alkoholen einer OH-Funktionalität ≥ 2 erhältlich sind.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren. Diese können bevorzugt durch Anlagerung von Lactonen bzw. Lactongemischen wie Butyrolacton, ε-caprolacton und / oder Methyl-ε-caprolacton an hydroxyfunktionelle Verbindungen wie mehrwertige Alkohole einer OH-Funktionalität ≥ 2, beispielsweise der vorstehend genannten Art, erhalten werden.

Die Polyesterpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polyesterpolyole beträgt bevorzugt 1,5 bis 3,5, besonders bevorzugt 1,8 bis 3,0.

Beispiele zur Herstellung der Polyester besonders geeigneter Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder Mischungen daraus..

Besonders zur Herstellung der Polyester geeignete Alkohole sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder Mischungen daraus.

Geeignete Polycarbonatpolyole sind in an sich bekannter Weise durch Umsetzung von organischen Carbonaten oder Phosgen mit Diolen oder Diol-Mischungen zugänglich.

Hierfür geeignete organische Carbonate sind beispielsweise Dimethyl-, Diethyl- und Diphenylcarbonat.

Geeignete mehrwertige Alkohole umfassen die oben im Rahmen der Diskussion der Polyesterpolyole genannten mehrwertigen Alkoholen einer OH-Funktionalität ≥ 2. Bevorzugt können 1,4-Butandiol, 1,6-Hexandiol und / oder 3-Methylpentandiol eingesetzt werden.

Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Die Polycarbonatpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polycarbonatpolyole beträgt bevorzugt 1,8 bis 3,2, besonders bevorzugt 1,9 bis 3,0.

Geeignete Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art, die ausschließlich auf Propylenoxid basieren. Bevorzugt sind ebenfalls Polyetherpolyole der vorgenannten Art, die statistische Copolymere oder Block-Copolymere, basierend auf Propylenoxid mit weiteren 1-Alkylenoxiden, sind, wobei der 1-Alykenoxidanteil insbesondere nicht höher als 80 Gew.-% ist. Ganz besonders bevorzugt sind Propylenoxid-Homopolymere sowie statistische Copolymere oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten insbesondere ≥ 20 Gew.-%, bevorzugt ≥ 45 Gew.-% ist. Oxypropylen- und Oxybutylen umfasst hierbei alle linearen und verzweigten C3- und C4-Isomere.

Die Polyetherpolyole haben bevorzugt zahlenmittlere Molmassen von ≥ 250 und ≤ 10000 g/Mol, besonders bevorzugt von ≥ 500 und ≤ 8500 g/Mol und ganz besonders bevorzugt von ≥ 600 und ≤ 4500 g/Mol. Ihre OH-Funktionalität beträgt bevorzugt 1,5 bis 4,0 und besonders bevorzugt 1,8 bis 3,1.

Weitere bevorzugte Polyetherpolyole bestehen aus einer isocyanatreaktiven Komponente umfassend hydroxyfunktionelle Multiblockcopolymere des Typs $Y(X_i\text{-}H)_n$ mit i = 1 bis 10 und n = 2 bis 8, wobei die Segmente X; jeweils aus Oxyalkyleneinheiten der Formel (IV)

$$-CH_2-CH(R)-O- \qquad \text{(IV)}$$

aufgebaut sind, in der R ein Alkyl- oder ein Arylrest, ist, der auch substituiert oder durch Heteroatome (wie Ethersauerstoffe) unterbrochen sein kann oder Wasserstoff und Y der zugrundeliegende Starter ist.

Der Rest R kann bevorzugt ein Wasserstoff-, Methyl-, Butyl-, Hexyl-, Octyl- oder ein ethergruppenhaltiger Alkylrest sein. Bevorzugte ethergruppenhaltiger Alkylreste basieren auf Oxyalkyleneinheiten.

Bevorzugt ist n eine ganze Zahl von 2 bis 6, besonders bevorzugt 2 oder 3 und ganz besonders bevorzugt gleich 2.

Bevorzugt ist ebenfalls, wenn i eine ganze Zahl von 1 bis 6, besonders bevorzugt von 1 bis 3 und ganz besonders bevorzugt gleich 1 ist.

Weiter bevorzugt ist, wenn der Anteil der Segmente X;, bezogen auf die Gesamtmenge der Segmente Xi und Y, > 50 Gew.-% und bevorzugt ≥ 66 Gew.-% ist.

Bevorzugt ist auch, wenn der Anteil der Segmente Y, bezogen auf die Gesamtmenge der Segmente $X_i$ und Y, < 50 Gew.-% und bevorzugt < 34 Gew.-% ist.

Die Multiblockcopolymere $Y(X_i\text{-}H)_n$ haben bevorzugt zahlenmittlere Molekulargewichte von > 1200 g/Mol, besonders bevorzugt > 1950 g/Mol, jedoch bevorzugt < 12000 g/Mol, besonders bevorzugt < 8000 g/Mol.

Die Blöcke $X_i$ können Homopolymere sein, die ausschlißelich ausschließlich aus gleichen Oxyalkylen-Wiederholungseinheiten bestehen. Sie können auch statistisch aus verschiedenen Oxyalkyleneinheiten oder ihrerseits blockweise aus verschiedenen Oxyalkyleneinheiten aufgebaut sein.

Bevorzugte basieren die Segmente X; ausschließlich auf Propylenoxid oder statistischen oder blockweisen Mischungen von Propylenoxid mit weiteren 1-Alkylenoxiden, wobei der Anteil an weiteren 1-Alykenoxiden bevorzugt nicht > 80 Gew.-% ist.

Besonders bevorzugte Segmente X; sind Propylenoxid-Homopolymere sowie statistische Copolymere oder Block-Copolymere, die Oxyethylen- und / oder Oxypropyleneinheiten aufweisen. Ganz besonders bevorzugt beträgt in diesem Fall der Anteil der Oxypropyleneinheiten, bezogen auf die Gesamtmenge aller Oxyethylen- und Oxypropyleneinheiten, ≥ 20 Gew.-% und noch weiter bevorzugt ≥ 40 Gew.-%.

Die Blöcke X; können durch ringöffnende Polymerisation der vorstehend beschriebenen Alkylenoxide auf einen

n-fach hydroxy- oder aminofunktionellen Starter $Y(H)_n$ aufaddiert werden.

Der Starter $Y(H)_n$ kann aus di- und / oder höher hydroxyfunktionellen Polymerstrukturen auf Basis cyclischer Ether oder aus di- und / oder höher hydroxyfunktionellen Polycarbonat-, Polyester-, Poly(meth)acrylat-, Epoxydharz- und / oder Polyurethanstruktureinheiten oder entsprechenden Hybriden bestehen.

Beispiele für geeignete Starter $Y(H)_n$ sind die oben genannten Polyester-, Polycarbonat- und Polyetherpolyole.

Die Polyesterpolyole haben bevorzugt zahlenmittlere Molmassen von 200 bis 2000 g/Mol, besonders bevorzugt von 400 bis 1400 g/Mol.

Die Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Die Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Besonders bevorzugte Starter $Y(H)_n$ sind insbesondere difunktionelle Polymere des Tetrahydrofuran, insbesondere difunktionelle aliphatische Polycarbonatpolyole und Polyesterpolyole sowie Polymere des $\varepsilon$-Caprolacton insbesondere mit zahlenmittleren Molmassen < 3100 g/Mol, bevorzugt $\geq$ 500 g/mol und $\leq$ 2100 g/mol.

Weitere Beispiele geeigneter Polyether und Verfahren zu deren Herstellung sind in der EP 2 172 503 A1 beschrieben, auf deren diesbezügliche Offenbarung hiermit Bezug genommen wird.

Bei einer weiteren bevorzugten Ausführungsform ist vorgesehen, dass das Schreibmonomer wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (V)

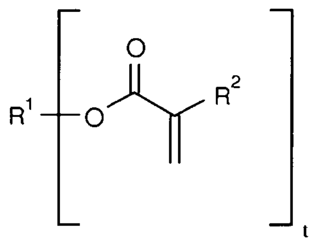

(V)

handeln, bei denen n≥1 und n≤4 ist und $R^1$, $R^2$ unabhängig voneinander Wasserstoff, lineare, verzweigte, cyclische oder heterocyclische unsubstituierte oder gegebenenfalls auch mit Heteroatomen substituierte organische Reste sind. Besonders bevorzugt ist $R^2$ Wasserstoff oder Methyl und/oder $R^1$ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie $\alpha,\beta$-ungesättigten Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, $\alpha$-Methylstyrol, Vinyltoluol, Olefinine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Selbstverständlich können auch weitere Urethanacrylate verwendet werden. Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hierfür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Di-phenylmethandiisocyanat, 1,5-Naphthylendiisocyanat, m-Methylthiophenylisocyanat, Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl(meth)acrylat, Polyethylenoxid-mono(meth)acrylate, Polypropylenoxidmono(meth)acrylate, Polyalkylenoxidmono(meth)-acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate. Darüber hinaus sind als isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunktionellen Acrylaten wie Hydroxyethyl(meth)acrylat, Hydroxypropyl(meth)acrylat und Hydroxybutyl(meth)-acrylat.

Besonders bevorzugt ist eine Kombination aus Komponenten a) und b) bei der Herstellung der Matrixpolymere bestehend aus Additionsprodukten von Butyrolacton, e-Caprolacton und/oder Methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Ganz besonders bevorzugt sind Additionsprodukte von e-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

Gemäß einer weiteren bevorzugten Ausführungsform ist vorgesehen, dass die Photopolymer-Fonnulierung zusätzlich Urethane als Additive enthält, wobei die Urethane insbesondere mit wenigstens einem Fluoratom substituiert sein können.

Bevorzugt können die Urethane die allgemeine Formel (VI)

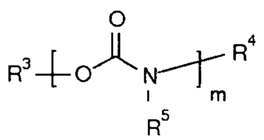

(VI)

haben, in der m≥1 und m≤8 ist und $R^3$, $R^4$, $R^5$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^3$, $R^4$, $R^5$ mit wenigstens einem Fluoratom substituiert ist und besonders be-

vorzugt $R^3$ ein organischer Rest mit mindestens einem Fluoratom ist. Besonders bevorzugt ist $R^4$ ein linearer, verzweigter, cyclischer oder heterocyclischer unsubstituierter oder gegebenenfalls auch mit Heteroatomen wie beispielsweise Fluor substituierter organischer Rest.

Die eingesetzten Photoinitiatoren sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden werden. Desweiteren werden sie je nach ihrer chemischen Natur in Photoinitiatoren für radikalische, anionische, kationische oder gemischte Art der Polymersiation unterschieden.

Typ 1-Photoinitiatoren (Norrish-Typ-I) für die radikalische Photopolymerisation bilden beim Bestrahlen durch eine unimolekulare Bindungsspaltung freie Radikale.

Beispiele für Typ 1-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bisimidazole, Aroylphosphinoxide, z.B. 2,4,6-Trimethyl-benzoyl-diphenylphosphinoxid, Sulfonium- und Iodoniumsalze.

Typ 11-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II- Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, , Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II-Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ I-Systeme und leiten sich von Übergangsmetall-Komplexen der ersten Reihe ab. Hier sind beispielsweise Chrom-Salze, wie z.B. trans-$Cr(NH_3)_2(NCS)_4^-$ (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren $SbF_6^-$, $AsF_6^-$ oder $PF_6^-$. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls $SbF_6^-$, $AsF_6^-$ oder $PF_6^-$ verwendet. Ansonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit $SbF_6^-$ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit kationischen Farbstoffen, wie sie beispielsweise in H. Berneth in Ullmann's Encyclopedia of Industrial Chemistry, Cationic Dyes, Wiley-VCH Verlag, 2008 beschrieben sind.

Beispiele für kationische Farbstoffe sind Astrazon Orange G, Basic Blue 3, Basic Orange 22, Basic Red 13, Basic Violett 7, Methylenblau, Neu Methylenblau, Azur A, Pyrillium I, Safranin O, Cyanin, Gallocyanin, Brilliant Grün, Kristallviolett, Ethylviolett und Thionin.

Besonders bevorzugt ist, wenn die erfindungsgemäße Photopolymer-Formulierung einen kationischen Farbstoff der Formel $F^+An^-$ enthält.

Unter kationischen Farbstoffen der Formel $F^+$ werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino- und Triamino(het)arylmethan-Farbstoffe, Mono-, Di- und Trimethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Mit $An^-$ ist ein Anion gemeint. Bevorzugte Anionen $An^-$ sind insbesondere $C_8$- bis $C_{25}$-Alkansulfonat, vorzugsweise $C_{13}$- bis $C_{25}$-Alkansulfonat, $C_3$- bis $C_{18}$-Perfluoralkansulfonat, $C_4$- bis $C_{18}$-Perfluoralkansulfonat, das in der Alkylkette mindestens 3 Wasserstoffatome trägt, $C_9$- bis $C_{25}$-Alkanoat, $C_9$- bis $C_{25}$-Alkenoat, $C_8$- bis $C_{25}$-Alkylsulfat, vorzugsweise $C_{13}$- bis $C_{25}$-Alkylsulfat, $C_8$- bis $C_{25}$-Alkenylsulfat, vorzugsweise $C_{13}$- bis $C_{25}$-Alkenylsulfat, $C_3$- bis $C_{18}$-Perfluoralkylsulfat, $C_4$- bis $C_{18}$-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-$C_4$- bis $C_{25}$-Alkyl-, $C_5$- bis $C_7$-Cycloalkyl-, $C_3$- bis Cs-Alkenyl- oder $C_7$- bis $C_{11}$-Aralkyl-sulfosuccinat, durch mindestens 8 Fluoratome substituiertes Bis-$C_2$- bis $C_{10}$-alkyl-sulfosuccinat, $C_8$- bis $C_{25}$-Alkyl-sulfoacetate, durch mindestens einen Rest der Gruppe Halogen, $C_4$- bis $C_{25}$-Alkyl, Perfluor-$C_1$- bis $C_8$-Alkyl und/oder $C_1$- bis $C_{12}$-Alkoxycarbonyl substituiertes Benzolsulfonat, ggf. durch Nitro, Cyano, Hydroxy, $C_1$- bis $C_{25}$-Alkyl, $C_1$- bis $C_{12}$-Alkoxy, Amino, $C_1$- bis $C_{12}$-Alkoxycarbonyl oder Chlor substituiertes Naphthalin- oder Biphenylsulfonat, ggf. durch Nitro, Cyano, Hydroxy, $C_1$- bis $C_{25}$-Alkyl, $C_1$- bis $C_{12}$-Alkoxy, $C_1$- bis $C_{12}$-Alkoxycarbonyl oder Chlor substituiertes Benzol-, Naphthalin- oder Biphenyldisulfonat, durch Dinitro, $C_6$- bis $C_{25}$-Alkyl, $C_4$- bis $C_{12}$-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, Bis-(sulfo-$C_2$- bis $C_6$-alkyl)-itaconsäureester, (Sulfo-$C_2$- bis $C_6$-alkyl)-$C_6$- bis $C_{18}$-alkancarbonsäureester, (Sulfo-$C_2$- bis $C_6$-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, $C_4$- bis $C_{12}$-Alkyl-triphenylborat, deren Phenyl- oder Phenoxy-Reste durch Halogen, $C_1$- bis $C_4$-Alkyl und/oder $C_1$- bis $C_4$-Alkoxy substituiert sein können, $C_4$- bis $C_{12}$-Alkyl-trinaphthylborat, Tetra-$C_1$- bis $C_{20}$-alkoxyborat, 7,8- oder 7,9-Dicarba-nido-undecaborat(1-) oder (2-), die gegebenenfalls an den B- und/oder C-Atomen durch eine oder zwei $C_1$- bis $C_{12}$-Alkyl- oder Phenyl-Gruppen substituiert sind, Dodecahydro-dicarbadodecaborat(2-) oder B-Ci- bis $C_{12}$-Alkyl-C-phenyl-dodecahydro-dicarbadodecaborat(1-) steht, wobei bei mehrwertigen Anionen wie Naphthalindisulfonat $An^-$ für ein Äquivalent dieses Anions steht, und wobei die Alkan- und Alkylgruppen verzweigt sein können und/oder durch Halogen, Cyano, Methoxy, Ethoxy, Methoxycarbonyl oder Ethoxycarbonyl substituiert sein können.

Besonders bevorzugte Anionen sind sec-$C_{11}$- bis $C_{18}$-Alkansulfonat, $C_{13}$- bis $C_{25}$-Alkylsulfat, verzweigtes $C_8$- bis $C_{25}$-Alkylsulfat, ggf. verzweigtes Bis-$C_6$- bis $C_{25}$-alkylsulfosuccinat, sec- oder tert.-$C_4$- bis $C_{25}$-Alkylbenzolsulfonat,

sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, (Sulfo-$C_2$- bis $C_6$-alkyl)-$C_6$- bis $C_{18}$-alkancarbonsäureester, durch bis zu 12 Halogenreste substituiertes Triscatecholphosphat, Cyanotriphenylborat, Tetraphenoxyborat, Butyltriphenylborat.

Bevorzugt ist auch, wenn das Anion $An^-$ des Farbstoffs einen AClogP im Bereich von 1-30, besonders bevorzugt im Bereich von 1-12 und insbesondere bevorzugt im Bereich von 1-6,5 aufweist. Der AClogP wird nach J. Comput. Aid. Mol. Des. 2005, 19, 453; Virtual Computational Chemistry Laboratory, http://www.vcclab.org berechnet.

Besonders bevorzugt sind Farbstoffe $F^+An^-$ mit einer Wasseraufnahme $\leq$5 Gew.-%.

Die Wasseraufnahme ergibt sich aus der Formel (F-1)

$$W = (m_f/m_t - 1)*100\% \quad (F\text{-}1),$$

worin mf die Masse des Farbstoffs nach Wassersättigung und $m_t$ die Masse des getrockneten Farbstoffs sind, $m_t$ wird durch Trocknen einer bestimmten Farbstoffmenge bis zur Massenkonstanz, beispielsweise bei erhöhter Temperatur im Vakuum ermittelt, $m_f$ wird durch Stehen einer bestimmtem Farbstoffmenge an der Luft bei einer definierten Luftfeuchtigkeit bis zur Gewichtskonstanz bestimmt.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserfarben blau, grün und rot jeweils einen geeigneten Photoinitiator enthält.

Die Schicht P kann bevorzugt eine Schichtdicke von 5 μm bis 100 μm, besonders bevorzugt von 5 μm bis 30 μm, ganz besonders bevorzugt von 10 μm bis 25 μm aufweisen.

Die Schicht P kann in bevorzugten Ausführungsformen der Erfindung auf eine Substratschicht S aufgebracht sein, welche ebenfalls in das erfindungsgemäße Sicherheits- und/oder Wertdokument eingearbeitet ist. Dabei handelt es sich bei der Substratschicht S bevorzugt um eine solche enthaltend wenigstens ein Poly- oder Copolycarbonat. In bevorzugten Ausführungsformen befindet sich daher zwischen der teilflächigen Schicht P und der Schicht A1 oder A2, die keinen Kontakt zu der Schicht K aufweist, eine teilflächige Schicht (S) enthaltend wenigstens ein Poly- oder Copolycarbonat.

Die Schicht S kann 15 bis 375 μm, bevorzugt 23 μm bis 175 μm, besonders bevorzugt 36 μm bis 125 μm dick sein. In der bevorzugten Ausführungsform, in der S enthaltend wenigstens ein Poly- oder Copolycarbonat ist, ist die Dicke der Schicht insbesondere bevorzugt 50 μm bis 125 μm.

In der vorangehend genannten Ausführungsform der Erfindung bietet die Schicht S den Vorteil, dass bereits eine hervorragende Haftung zwischen der Schicht P und dieser Schicht S besteht und zwischen der Schicht S enthaltend wenigstens ein Poly- oder Copolycarbonat und der an diese angrenzende Schicht A1 oder A2 - ebenfalls enthaltend wenigstens ein Poly- oder Copolycarbonat - bei der Herstellung des erfindungsgemäßen Sicherheits- und/oder Wertdokuments ein monolithischer Schichtverbund entsteht.

In die Schicht P wird ein Volumenhologramm einbelichtet. Dies kann ein Reflektions-, ein Transmissions- oder ein Edgelit Hologramm sein. Die Einbelichtung erfolgt i.d.R. vor der Integration in die Karte und wird mit einem monochromatischen Laser durchgeführt, wobei mittels eines durch einen Strahlteiler und einer Aufweitung des Laserstrahls ein Interferenzfeld erzeugt wird. Der Laser kann dabei verschiedenen Farben (Lichtfrequenzen) erzeugen, vorzugsweise eine blaue, rote, grüne oder gelbe Emissionswellenlänge verwendet werden kann. Ebenfalls ist es möglich gleichzeitig und nacheinander verschiedenfarbige Laser zu verwenden. So ist es damit möglich zwei oder mehrfarbige Reflektionshologramme zu erzeugen.

In der Schicht P können ein oder mehrere Hologramme an derselben Stelle oder nebeneinander einbelichtet werden. Belichtet man an derselben Stelle ein, so können unterschiedliche Bildinhalten (z.B. Seriennummern, Fotos des Kartenträgers, andere biometrische Daten, digital kodierte Daten, Hoheitssymbole, Firmenlogos) einbelichtet werden. Ebenfalls können auch verschiedene Ansichten eines Objektes mit leicht variierenden Rekonstruktionswinkeln einbelichtet werden, so daß Stereogramme entstehen. Ebenfalls ist es möglich versteckte Hologramme und Mikrotexte einzubelichten.

Ebenfalls ist es vorteilhaft, um das Sicherheitsniveau einer Karte zu erhöhen, den holografischen Inhalt der Schicht P mit anderen Individualisierungsmerkmalen zu verknüpfen. So können die gleiche Seriennummern sowohl in

der Schicht K als auch an anderen Stellen der Karte verwendet werden, um einen visuellen Abgleich zu ermöglichen. Dabei sind die üblichen Individualisierungsverfahren einer solchen Karte denkbar wir Inkjet, Lasergravur, Laserprint, Digitaldruck etc.

Auch ist es möglich mehrere Hologramme aus unterschiedliche Belichtungsrichtungen einzubelichten, die dann unter Rekonstruktion mit mehreren Lichtquellen, sich ergänzende Bildinhalte zeigen.

Bei dem Kleber K kann es sich um einen Flüssigkleber, der strahlenhärten ist handeln. Ebenfalls ist es möglich 2-Komponenten und Sekundenkleber (Cyanacrylate) zu verwenden. Weiterhin können auch Schmelzkleber genutzt werden. Bevorzugt handelt es sich bei dem Kleber in Schicht K um wenigstens einen Schmelzkleber, bevorzugt um wenigstens einen Schmelzkleber ausgewählt aus thermoplastischem Polyurethan, Polyamid, Polyolefin oder Copolyester, besonders bevorzugt um wenigstens einen Schmelzkleber ausgewählt aus thermoplastischem Polyurethan oder Copolyester. Ganz besonders bevorzugt sind thermoplastische Polyurethane als Schmelzkleber.

Bei der Schicht K kann es sich um eine transparente oder nicht-transparente Schicht handeln. Für den Fall, dass die Schicht K sich auf der Seite der Schicht P befindet, von der die Aufsicht auf das Hologramm erfolgen soll, handelt es sich bei der Schicht K um eine solche mit ausreichender Transparenz, damit das in der darunterliegenden Schicht P enthaltene Hologramm gut sichtbar ist. Bevorzugt handelt es sich daher in diesen Ausführungsformen bei der Schicht K um eine transparente Schicht. In anderen Ausführungsformen, in denen die Aufsicht auf das Hologramm von der anderen Seite der Schicht P erfolgen soll, kann es sich bei der Schicht K auch um eine transluzente, weiße, schwarze oder andersfarbige Schicht handeln. Um eine höhere Sichtbarkeit der Hologramms zu bewirken, sind hier gedeckte, dunkle Farben bevorzugt, besonders bevorzugt ist schwarz.

Unter Transparenz im Rahmen dieser Erfindung ist eine Transmission für Licht der Wellenlänge von 380 nm bis 800 nm von mehr als 70%, bevorzugt von mehr als 80%, besonders bevorzugt von mehr als 85% zu verstehen. Die Transmission kann mit einem BYK Haze-gard plus der Firma BYK Additives & Instruments gemäß ASTM D 1003 gemessen werden.

Insbesondere zur Verringerung oder Vermeidung von Farbverschiebungen bei vollfarbigen RGB-Hologrammen (Rot-Grün-Blau-Hologramme bzw. "full colour") und echtfarbigen ("true colour") Hologrammen kann die Verwendung von Schmelzklebern, insbesondere von thermoplastischen Polyurethanen als Schmelzkleber vorteilhaft sein. Bei diesen Hologrammen ist auch eine geringe Wellenlängenverschiebung um $\geq$ 20 nm ("Farbshift") bereits problematisch, da der Gesamtfarbeindruck des Hologrammes bereits durch einen derart geringen Farbshift verfälscht wird.

Insbesondere bei den im Stand der Technik derzeit bevorzugt eingesetzten Flüssigklebstoffen auf Basis von strahlenhärtenden Acrylaten oder Epoxygruppen tritt ein solcher Farbshift in der Regel auf. Beim Einsatz der oben genannten Schmelzkleber, bevorzugt thermoplastischen Polyurethanen als Schmelzkleber kann ein solcher Farbshift hingegen verringert oder sogar vermieden werden. Zwar zeigen Schmelzkleber gegenüber quervernetzenden Reaktivklebstoffen (Flüssigklebstoffen) grundsätzlich den Nachteil, dass die Klebeverbindung durch nachträgliches Erhitzen reversibel wieder aufschmelzbar ist, ein nachträgliches Auftrennen des Mehrschichtverbundes und Entfernen des Hologramms bei einem Fälschungsversuch ist aber beim erfindungsgemäßen Sicherheits- und/oder Wertdokument aufgrund des Einschlusses in den monolithischen Verbund zwischen den Schichten A1 und A2 nicht möglich. Das Dokument sowie das Hologramm würden bei einem solchen Versuch irreversibel zerstört.

Geeignete thermoplastische Polyurethane (TPU) werden zumeist aus linearen Polyolen (Makrodiolen), wie Polyester-, Polyether- oder Polycarbonatdiolen, organischen Diisocyanaten und gegebenenfalls kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Bevorzugte thermoplastische Polyurethane für die Schicht K im erfindungsgemäßen Sicherheits- und/oder Wertdokument sind Reaktionsprodukte aus den genannten

a) organischen Diisocyanaten

b) Polyetherdiolen und

c) gegebenenfalls Kettenverlängerern.

Als Diisocyanate a) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4''-triisocyanat oder Polyphenyl-polymethylen-polyisocyanaten.

Bevorzugte organische Diisocyanate a) sind aromatische Diisocyanate, besonders bevorzugt 2,4-oder 2,6-Toluylendiisocyanat oder Gemische aus diesen, 2,4'-Diphenylmethandiisocyanat oder 2,2'-Diphenylmethandiisocyanat oder Gemische aus diesen, 2,4'-Diphenylmethandiisocyanat und 4,4'-Diphenylmethandiisocyanat oder Gemische aus diesen, urethanmodifizierte flüssige 4,4'-Diphenylmethandiisocyanate oder 2,4'-Diphenylmethandiisocyanate oder Gemische aus diesen, 4,4'-Diisocyanatodiphenyl-ethan-(1,2) oder 1,5-Naphthylendiisocyanat oder Gemischen aus einem oder mehreren der vorgenannten. Ganz besonders bevorzugte Diisocyanate sind 2,4'-Diphenylmethandiisocyanat und 4,4'-Diphenylmethandiisocyanat oder Gemische aus diesen.

Bevorzugte Polyetherdiole besitzen vorzugsweise zahlenmittleren Molekulargewichte $\overline{M}_n$ von 500 bis 10.000 g/mol, besonders bevorzugt 500 bis 6000 g/mol. Sie können sowohl einzeln als auch in Form von Mischungen untereinander zur Anwendung kommen.

Die zahlenmittleren Molekulargewichte können mittels OH-Zahl Bestimmung nach der gemäß der ASTM D 4274 bestimmt werden.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin, 1,2-Butylenoxid und 2,3-Butylenoxid. Die Alkylenoxide können einzeln, alternierend nacheinander oder als Mischungen verwendet werden.

Als Startermoleküle kommen beispielsweise in Betracht: Wasser, Aminoalkohole, wie N-Alkyldiethanolamine, beispielsweise N-Methyl-diethanolamin und Diole wie Ethylenglykol, Diethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans und/oder des 1,3-Propylenglykols. Es können auch trifunktionelle Polyether in Anteilen von 0 bis 30 Gew.-% bezogen auf die bifunktionellen Polyether eingesetzt werden, jedoch höchstens in solcher Menge, dass ein noch thermoplastisch verarbeitbares Produkt entsteht.

Bevorzugte Polyetherdiole sind Zerewitinoff-aktive Polyetherdiole mit im Mittel mindestens 1,8 bis höchstens 3,0, bevorzugt 1,8 bis 2,2, Zerewitinoff-aktiven Wasserstoffatomen.

Als Zerewitinoff-aktive Wasserstoffatome werden alle an N, O oder S gebundene Wasserstoffatome bezeichnet, die nach einem von Zerewitinoff aufgefundenen Verfahren durch Umsetzung mit Methylmagnesiumhalogenid Methan liefern. Die Bestimmung erfolgt nach der Zerewitinoff-Reaktion, wobei Methylmagnesiumjodid mit der zu untersuchenden Verbindung umgesetzt wird und mit acidem Wasserstoff zu einem Magnesiumsalz und dem entsprechenden Kohlenwasserstoff reagiert. Das entstehende Methan wird gasvolumetrisch bestimmt.

Bevorzugte Kettenverlängerer c) sind Zerewitinoff-aktive Kettenverlängerer, die im Mittel 1,8 bis 3,0 zerewitinoff-aktive Wasserstoffatome aufweisen. Hierunter versteht man neben Aminogruppen, Thiolgruppen oder Carboxylgruppen aufweisenden Verbindungen solche mit zwei bis drei, bevorzugt zwei Hydroxylgruppen. Hxdroxylverbindungen mit zwei bis drei, bevorzugt zwei Hydroxylgruppen sind als Kettenverlängerer besonders bevorzugt.

Als Kettenverlängerungsmittel werden beispielsweise und bevorzugt Diole oder Diamine mit einem Molekulargewicht von 60 bis 500 g/mol, vorzugsweise aliphatische Diole mit 2 bis 14 Kohlenstoffatomen eingesetzt, wie z.B. 1,2-Ethandiol (Ethylenglykol), 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Diolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,2-Propandiol, 1,3-Propandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Besonders bevorzugte Kettenverlängerer c) sind beispielsweise Diole wie Ethylenglykol, 1,4-Butandiol, 1,6-Hexandiol oder deren Gemische.

Die relativen Mengen der Verbindungen b) und c) werden bevorzugt so gewählt, dass das Verhältnis der Summe der Isocyanatgruppen in a) zu der Summe der Zerewitinoff-aktiven Wasserstoffatome in b) und c) 0,85:1 bis 1,2:1 beträgt, besonders bevorzugt 0,9:1 bis 1,1:1.

Die thermoplastischen Polyurethane können gegebenenfalls Katalysatoren d) enthalten. Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den thermoplastischen Polyurethanen beträgt in der Regel etwa 0 bis 5 Gew.-%, bevorzugt 0 bis 2 Gew.-%, bezogen auf das Gesamtgewicht des TPU.

Die thermoplastischen Polyurethane (TPU) können gegebenenfalls als Hilfs- und Zusatzstoffe e) 0 bis zu maximal 20 Gew.-%, bevorzugt 0 bis 10 Gew.-%, bezogen auf das Gesamtgewicht des TPU, der üblichen Hilfs- und Zusatzstoffe enthalten. Typische Hilfs- und Zusatzstoffe sind Pigmente, Farbstoffe, Flammschutzmittel, Stabilisatoren gegen Alterungs- und Witterungseinflüsse, Weichmacher, Gleit- und Entformungsmittel, Kettenabbrecher, fungistatisch und bakteriostatisch wirkende Substanzen sowie Füllstoffe und deren Mischungen.

Bevorzugt können als solche Zusatzstoffe unter anderem gegenüber Isocyanaten monofunktionelle Verbindungen in Anteilen bis zu 2 Gew.-%, bezogen auf das Gesamtgewicht des thermoplastischen Polyurethans, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe, beispielsweise Polycarbonate, sowie Weichmacher und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Es kann zudem vorteilhaft sein, geringe Mengen eines höherfunktionellen Polyisocyanats, beispielsweise an Tris-(6-isocyanatohexyl)-biuret zuzugeben, um die mechanischen Eigenschaften einer zur Herstellung des erfindungsgemäßen Sicherheits- und/oder Wertdokument eingesetzten Schmelzklebefolie zu verbessern.

Solche bevorzugten Schmelzkleber beispielsweise in Form von Schmelzklebefolien der Firma Epurex, mit dem Handelsnamen Platilon® kommerziell erhältlich.

Die Schicht K kann bevorzugt eine Grammatur von 10 g/m$^2$ bis 100 g/m$^2$, besonders bevorzugt von 10 g/m$^2$ bis 75 g/m$^2$, ganz besonders bevorzugt von 10 g/m$^2$ bis 50 g/m$^2$ aufweisen.

Bevorzugt handelt es sich bei dem Hologramm im erfindungsgemäßen Sicherheits- und/oder Wertdokument um ein Volumenhologramm.

Die Schicht P weist an verschiedenen Stellen Aussparungen auf und die beiden Schichten A1 und A2 sind im Bereich dieser miteinander verbunden. Insbesondere sind derartige Aussparungen in der Schicht P an solchen Stellen vorhanden, an denen kein Hologramm in diese Schicht eingebracht ist, d.h. an den nicht belichteten Stellen. Bevorzugt weist die Schicht K die entsprechenden Aussparungen an den gleichen Stellen auf wie die Schicht P. Dies kann beispielsweise dadurch gewährleistet werden, dass bei der Herstellung eines solchen erfindungsgemäßen Sicherheits- oder Wertdokument eine Photopolymerschicht, beispielsweise in Form einer Folie, hergestellt wird und diese anschließend mit einer Klebeschicht K versehen wird. In diesen Verbund aus Schicht P und K können dann vor dem Einbringen in den Verbund mit den Schichten A1 und A2 Aussparungen gestanzt werden. Dabei kann es sich beispielsweise um Löcher unterschiedlicher Geometrie, d.h. rund, viereckig etc., handeln.

Bevorzugt handelt es sich bei dem erfindungsgemäßen Sicherheits- und/oder Wertdokument um ein Identifikationsdokument, bevorzugt eine Identifikationskarte (ID-Karte), wie z.B. einen Personalausweis, Reisepass, Führerschein, eine Bankkarte, Kreditkarte, Versicherungskarte, sonstige Ausweiskarte etc..

Das erfindungsgemäße Sicherheits- und/oder Wertdokument kann bevorzugt eine Gesamtdicke von 300 $\mu$m bis 1500 $\mu$m, besonders bevorzugt von 500 $\mu$m bis 1000 $\mu$m aufweisen.

Dabei kann das erfindungsgemäße Sicherheits- und/oder Wertdokument zusätzlich zu den Schichten A1, A2, P und K weitere thermoplastische Kunststoffschichten, bevorzugt Schichten enthaltend wenigstens ein Poly- oder Copolycarbonat aufweisen.

Weiterhin kann das erfindungsgemäße Sicherheits- und/oder Wertdokument zusätzlich zu den Schichten A1, A2, P und K weitere Sicherheitselemente wie beispielsweise elektronische Bauteile enthalten.

Die erfindungsgemäßen Sicherheits- und/oder Wertdokumente lassen sich auf einfach Weise herstellen, indem mittels Lamination eines entsprechenden Schichtstapels der Mehrschichtverbund gebildet wird.

Weiterhin Gegenstand der vorliegenden Erfindung ist daher ein Verfahren zur Herstellung eines erfindungsgemäßen Sicherheits- und/oder Wertdokumentes, wobei ein Schichtstapel aus wenigstens den Schichten A1, P, A2 und gegebenenfalls K gebildet wird, wobei die Schichten P und gegebenenfalls K sich nur teilflächig zwischen den Schichten A1 und A2 befinden und dieser Schichtstapel anschließend zu einem Sicherheits- und/oder Wertdokument laminiert wird, dadurch gekennzeichnet, dass in die Schichten P und gegebenenfalls K vor Bildung des Schichtstapels Aussparungen gestanzt werden..

Ein solcher Schichtstapel kann zudem weitere Schichten, insbesondere weitere Schichten enthaltend wenigstens ein Poly- oder Copolycarbonat aufweisen.

An diesen Aussparungen kann sich später beim Laminieren des Schichtstapels das geschmolzene Polycarbonat zum monolithischen Schichtverbund verbinden.

In einer bevorzugten Ausführungsform des erfindungsgemäßen Verfahrens kann dabei vor Bildung des Schichtstapels zunächst eine Schicht P mit einer Schicht K zu einem Zweischichtverbund verbunden werden und anschließend aus diesem Zweischichtverbund die Aussparungen ausgestanzt werden. Dabei können innerhalb des Schichtstapels die Schichten A1 und A2 flächenmäßig rund herum über die flächenmäßige Ausdehnung der Schichten P und K herausragen oder auch bündig mit diesen beiden Schichten abschließen.

Eine Schicht P kann beispielsweise derart gebildet werden, dass aus einer Photopolymer-Fonnulierung eine Photopolymerschicht auf einem Substrat hergestellt wird und das Substrat anschließend von der Photopolymerschicht abgezogen wird. So kann eine selbsttragende Photopolymerschicht erhalten werden, die dann mit einer Schicht K, beispielsweise flächig oder punktuell mittels Ultraschallschweißen oder thermischen Punktschweißen, verbunden wird.

Es besteht auch die Möglichkeit als Substrat für die Photopolymerschicht P eine solches enthaltend wenigstens ein Poly- oder Copolycarbonat zu verwenden, und das Substrat dann als Substratschicht S mit in das erfindungsgemäße Dokument einzuarbeiten. In einer solchen Ausführungsform würden dann Aussparungen in die Schicht P und das Substrat (die Substratschicht S) und gegebenenfalls in die Schicht K gestanzt.

Besonders bevorzugt für die Herstellung der Schicht K eignen sich dabei beispielsweise Schmelzklebefolien. Die Schicht K kann die komplette Fläche der Schicht P überdecken, kann aber auch flächenmäßig kleiner sein. Bevorzugt deckt die Schicht K aber mindestens die Fläche der Schicht P ab, über die sich das eingebrachte Hologramm erstreckt.

In dieser Ausführungsform kann es je nach Schichtdicke der Schichten P und K vorteilhaft sein, eine Zwischenschicht enthaltend wenigstens ein Poly- oder Copolycarbonat um den aus den Schichten P und K gebildeten Verbund zu legen, um deutliche Unebenheiten auszugleichen. Dabei würde dann der monolithische Schichtverbund zwischen den Schichten A1, A2 und dieser Zwischenschicht gebildet.

Die folgenden Beispiele dienen der exemplarischen Erläuterung der Erfindung und sind nicht als Beschränkung aufzufassen.

Zunächst werden beispielhafte Aufbauten für erfindungsgemäße Sicherheits- oder Wertdokumente anhand der Zeichnungen erläutert.

In den Zeichnungen zeigen

Fig. 1 eine schematische Darstellung eines Sicherheits- oder Wertdokuments;

Fig. 2 eine schematische Darstellung eines Sicherheits- oder Wertdokuments;

Fig. 3 eine schematische Darstellung eines Sicherheits- oder Wertdokuments;

Fig. 4 eine schematische Darstellung eines erfindungsgemäßen Sicherheits- oder Wertdokuments;

Fig. 5 eine schematische Darstellung eines erfindungsgemäßen Sicherheits- oder Wertdokuments;

Fig. 6 eine schematische Darstellung eines erfindungsgemäßen Sicherheits- oder Wertdokuments;

Fig. 7 eine schematische Darstellung eines erfindungsgemäßen Sicherheits- oder Wertdokuments;

Fig. 8 eine schematische Darstellung eines Sicherheits- oder Wertdokuments;

Fig. 9 eine schematische Darstellung einer Folienbeschichtungsanlage zur Herstellung eines Photopolymers;

Fig. 10 eine schematische Darstellung einer Apparatur zur Erzeugung eines Hologramms in einem Photopolymer bei einer Belichtungswellenlängen von 633 nm (rot);

Fig. 11 die elliptische Form eines mit der Apparatur der Figur 10 geschriebenen Hologramms.

Das Sicherheits- oder Wertdokument der Figur 1 umfasst eine erste Schicht A1 und eine zweite Schicht A2, die jeweils Polycarbonat enthalten oder daraus bestehen kann. Vorliegend ist die Schicht A1 transparent ausgebildet. Die Schicht A2 ist nicht transparent und hat eine weiße Farbe. Zwischen den beiden Schichten A1 und A2 ist teilflächig eine Schicht P angeordnet. Die Schicht P enthält oder besteht aus einem Polypolymer, in das ein Hologramm einbelichtet ist. Die Schicht A1 ist im fertigen Zustand flächig mit der Schicht P und abschnittsweise um die Schicht P herum mit der Schicht A2 verbunden. Die Schicht A2 ist analog flächig mit der Schicht P und abschnittsweise um die Schicht P herum mit der Schicht A1 verbunden. Der Verbund kann beispielsweise durch Laminieren der Schichten A1, A2 und P hergestellt werden.

Das Sicherheits- oder Wertdokument der Figur 2 entspricht im Wesentlichen der Ausführungsform der Figur 1. Es ist lediglich zusätzlich eine Schicht K vorhanden, die einen Kleber enthält. Die Schicht K ist vollflächig mit der Schicht P und teilflächig mit der Schicht A2 verbunden.

Das Sicherheits- oder Wertdokument der Figur 3 entspricht im Wesentlichen der Ausführungsformen der Figuren 1 und 2. Es ist zusätzlich eine Schicht S vorhanden, die die Substratfolie des Photopolymers darstellt, die in dieser Ausführungsform nicht entfernt wird. Eine Schicht K kann optional vorhanden sein. K kann bevorzugt transparent und/oder schwarz sein. Die Schichten S und P sind vollflächig miteinander verbunden. S ist transparent und teilflächig mit A1 verbunden.

Die Ausführungsform der Figur 4 ähnelt strukturell ebenfalls dem Dokument der Figur 1. Unterschied ist hier, dass die Schicht P dieselben Ausmaße wie die Schichten A1 und A2 aufweist und darüber hinaus in ihren Randbereichen umlaufend kreisrunde Aussparungen ausgestanzt sind. Die abschnittsweise Verbindung der Schichten A1 und A2 erfolgt hier durch diese Aussparungen hindurch.

In der Figur 5 ist wiederum eine Variante der Ausführungsform der Figur 4 gezeigt, bei der zusätzlich in der Zeichnung oberhalb der Schicht P eine teilflächige Schicht S vorhanden ist. Diese hat dieselben Ausmaße wie die Schichten A1, A2 und P. Darüber hinaus sind in ihr deckungsgleich zu der Schicht P in den Randbereichen kreisrunde Aussparungen ausgestanzt. Die Schichten S und P sind vollflächig miteinander verbunden. Die Schichten A1 und A2 sind abschnittsweise durch die Aussparungen in den Schichten S und P hindurch verbunden.

Bei der Ausführungsform der Figur 6 handelt es sich wiederum um eine Variante des Dokuments der Figur 5. Zusätzlich ist hier in der Zeichnung unterhalb der Schicht P eine Schicht K vorhanden, die wiederum einen Klebstoff enthält. Die Schicht K hat dieselben Ausmaße wie die Schichten A1, A2, P und S und darüber hinaus sind in ihr deckungsgleich zu den Schichten P und S in den Randbereichen kreisrunde Aussparungen ausgestanzt. Die Schicht K ist vollflächig mit den Schichten P und A2 verbunden. Die Schichten A1 und A2 sind abschnittsweise durch die Aussparungen in den Schichten S, P und K hindurch verbunden.

Bei der Ausführungsform der Figur 7 handelt es sich wiederum um eine weitere Variante des Dokuments der Figur 5. Hier ist in der Zeichnung oberhalb der Schicht P eine Schicht K vorhanden, die wiederum einen Klebstoff enthält. In dieser Ausführungsform ist K transparent. Die Schicht K hat dieselben Ausmaße wie die Schichten A1, A2, P und S und darüber hinaus sind in ihr deckungsgleich zu den Schichten P und S in den Randbereichen kreisrunde Aussparungen ausgestanzt. Die Schicht K ist vollflächig mit den Schichten P und A1 verbunden. Die Schichten A1 und A2 sind abschnittsweise durch die Aussparungen in den Schichten S, P und K hindurch verbunden.

Figur 8 zeigt schließlich ein Sicherheits- oder Wertdokument mit einer Schicht A2, in der eine Vertiefung ausgebildet ist, deren Ausmaße denen der Schicht P entsprechen. Dies verringert beim Verbinden der Schichten, dass ein zu großer Druck auf die Schicht P ausgeübt wird, was die Qualität des Holgrammes in der Schicht P negativ beeinflussen könnte. Zusätzlich ist bei dem Dokument eine transparente Schicht K vorhanden, deren Ausmaße wiederum mit denen der Schicht P übereinstimmen. Die Schichten P und K sind vollflächig verbunden.

Generell können A 1 und A2 auch aus mehreren Einzelschichten bestehen.

**<u>Beispiele</u>**

**<u>Einsatzstoffe:</u>**

**Einsatzstoffe für die holografischen Medien:**

<u>Komponente D:</u> Fascat 4102 0,07 %, Urethanisierungskatalysator, Butylzinn-tris(2-ethylhexanoat), Produkt der Arkema GmbH, Düsseldorf, Deutschland.

<u>Byk® 310</u> (silikonbasiertes Oberflächenadditiv der Firma BYK-Chemie GmbH, Wesel, 25%ige Lösung in Xylol)

0,3%

Komponente E: C. I. Basic Blue 3 (umgesalzt als Bis-(2-ethylhexyl)sulfosuccinat) 0,26 %, Safranin O (umgesalzt als Bis-(2-ethylhexyl)sulfosuccinat) 0,13 % und Astrazon Orange G (umgesalzt als Bis-(2-ethylhexyl)sulfosuccinat) 0,13% mit CGI 909 (Versuchsprodukt der Fa.BASF SE, Basel, Schweiz) 1,5%, als Lösung in 5,8% Ethylacetat gelöst. Prozentgehalte beziehen sich auf die Gesamtformulierung des Mediums.

Komponente F: Ethylacetat (CAS-Nr. 141-78-6).

Komponente G: Desmodur® N 3900, Handelsprodukt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %.

Trägersubstrat: Makrofol® DE 1-1 CC 175 μm (Bayer MaterialScience AG, Leverkusen, Deutschland).

**Einsatzstoffe für die ID-Kartenaufbauten** :

Folie 1: Platilon ® M 2204 AC-T, schwarz; Handelsprodukt der Firma Epurex Films GmbH & Co. KG, Walsrode, Deutschland, Grammatur 15 g/m$^2$ (vor den Versuchen wurde die PE Trägerfolie abgezogen).

Folie 2: Makrofol® ID 4-4; 010207 (weiss); Handelsprodukt der Firma Bayer MaterialScience AG, Leverkusen, Deutschland, Schichtdicke 250 μm.

Folie 3: Makrofol® ID 6-2 (transparent, laserbar), Handelsprodukt der Firma Bayer MaterialScience AG, Leverkusen, Deutschland, Schichtdicke 100 μm.

Photopolymerfolie hergestellt wie nachfolgend unter Herstellung von holographischen Medien auf einer Folienbeschichtungsanlage beschrieben.

**Herstellungsvorschriften weiterer Einsatzstoffe für die holografischen Medien:**

Herstellung von Komponente A:

In einem 1 L Kolben wurden 0,18 g Zinnoktoat, 374.8 g ε-caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsartiger Feststoff erhalten.

Herstellung von Komponente B1 (Phosphorthioyltris(oxy-4,1-phenyleniminocarbonyloxyethan-2,1-diyl)-triacrylat):

In einem 500 mL Rundkolben wurden 0,1 g 2,6-Di-tert.-butyl-4-methylphenol, 0,05 g Dibutylzinndilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.

Herstellung von Komponente B2 (2-({[3-(Methylsulfanyl)phenyl]carbamoyl}oxy)ethylprop-2-enoat):

In einem 100 mL Rundkolben wurden 0,02 g 2,6-Di-tert.-butyl-4-methylphenol, 0,01 g Desmorapid® Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.

Herstellung des Additives C (Bis(2,2,3,3,4,4,5,5,6,6,7,7-dodecafluorheptyl)-(2,2,4-trimethylhexan-1,6-diyl)biscarbamat):

In einem 2000 mL Rundkolben wurden 0,02 g Desmorapid® Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

**Herstellung von holographischen Medien auf einer Folienbeschichtungsanlage**

Im Folgenden wird die kontinuierliche Herstellung von holographischen Medien in der Form von Filmen aus erfindungsgemäßen und nicht erfindungsgemäßen Photopolymer-Formulierungen beschrieben.

Zur Herstellung wurde die in Figur 9 beschriebene Folienbeschichtungsanlage verwendet.

Figur 9 zeigt den schematischen Aufbau der verwendeten Beschichtungsanlage. In Fig. 9 haben die einzelnen Bauteile die folgenden Bezugszeichen:

1 Vorratsbehälter

2 Dosiereinrichtung

3 Vakuumentgasungseinrichtung

4 Filter

5 Statischer Mischer

6 Beschichtungseinrichtung

7 Umlufttrockner

8 Trägersubstrat

9 Abdeckschicht

Zur Herstellung der Photopolymer-Formulierung wurden in einem Rührbehälter 304,3g Komponente A (Polyol) schrittweise mit einer Schreibmonomermischung aus 138g Komponente B1 und 138g Komponente B2, mit 191g Additiv C, 0,60g Komponente D, 2,55g BYK® 310 und 101g Komponente F versetzt und gemischt. Anschließend wurden 66,5g Komponente E der Mischung im Dunklen hinzugefügt und vermischt, so dass eine klare Lösung erhalten wurde. Wenn nötig, wurde die Formulierung für kurze Zeit bei 60 °C erwärmt, um die Einsatzstoffe schneller in Lösung zu bringen. Dieses Gemisch wurde in einen der beiden Vorratsbehälter 1 der Beschichtungsanlage eingebracht. In den zweiten Vorratsbehälter 1 wurde die Komponente G (Polyisocyanat) eingefüllt. Beide Komponenten wurden dann jeweils durch die Dosiereinrichtungen 2 im Verhältnis von 942,2 (Komponenten A bis F) zu 57,8 (Komponente G) zur Vakuumentgasungseinrichtung 3 gefördert und entgast. Von hier aus wurden sie dann jeweils durch die Filter 4 in den statischen Mischer 5 geleitet, in dem die Vermischung der Komponenten zur Photopolymer-Formulierung erfolgte. Die erhaltene, flüssige Masse wurde dann im Dunklen der Beschichtungseinrichtung 6 zugeführt.

Bei der Beschichtungseinrichtung 6 handelte es sich im vorliegenden Fall um ein dem Fachmann bekannte Schlitzdüse. Alternativ kann aber auch ein Rakelsystem (Doctor Blade). zum Einsatz kommen. Mit Hilfe der Beschichtungseinrichtung 6 wurde die Photopolymer-Formulierung bei einer Verarbeitungstemperatur von 20 °C auf Makrofol DE 1-1 (125 μm) appliziert und für 5,8 Minuten bei einer Vernetzungstemperatur von 80°C in einem Umlufttrockner 7 getrocknet. Dabei wurde ein Medium in der Form eines Films erhalten, der dann mit einer 40 μm dicken Polyethylenfolie als Abdeckschicht 9 versehen und aufgewickelt wurde.

Die erzielte Schichtdicke des Films lag zwischen 18 μm.

**Herstellung von Rellektionshologrammen im Photopolymer:**

In das Photopolymer wurde ein Hologramm mittels einer Apparatur gemäß Fig. 10 einbelichtet. Dabei handelte es sich um monochromatische Hologramme mit 633 nm Laserwellenlänge. Dazu wurden Stücke des Filmes im Dunkeln abgeschnitten, die Kaschierfolie entfernt und die Filme mit der Photopolymerseite nach unten auf ein Glas der Größe 50 x 75 mm und Dicke 1 mm blasenfrei laminiert. Als Gläser wurden Corning Gläser der Firma Schott AG, Mainz, Deutschland verwendet.

Der Strahl eines Lasers (Emissionswellenlänge 633 nm) wirde mit Hilfe einer optionalen Aufweitungslinse (AF) und der Kollimationslinse (CL), die nach dem Shutter S platziert ist auf einen Durchmesser von ~ 3 - 4 cm aufgeweitet. Der Durchmesser des aufgeweiteten Laserstrahls wird dabei durch die Apertur des geöffneten Shutters bestimmt. Es wird bewusst auf eine inhomogene Intensitätsverteilung des aufgeweiteten Laserstrahles geachtet. So beträgt die Randintensität $P_R$ ~ nur die Hälfte der Intensität $Pz$ im Zentrum des aufgeweiteten Laserstrahls. P ist hier als Leistung/Fläche zu verstehen. Der aufgeweitete Laserstrahl durchläuft zunächst eine schräg zum Strahl gestellte Glasplatte, die als Shearing Plate (SP) dient. Anhand des nach oben gespiegelten Interferenzmusters, das von den zwei Glasoberflächenreflexen der SP erzeugt wird, kann erkannt werden, ob der Laser stabil im Single Mode emittiert. Dann ist auf einer über der SP platziert Mattscheibe aus dunklen und hellen Streifen zu sehen. Nur wenn Single Mode Emission gegeben ist werden holographischen Belichtungen durchgeführt. Im Falle der DPSS Laser kann der Single Mode durch einstellen des Pumpstroms erreicht werden. Der aufgeweitete Strahl durchläuft das etwa 15° schräg gestellte holographische

Medium (P), dieser Teil bildet den Referenzstrahl, um dann vom zu P parallel angeordneten Objekt (O) wieder zurück in P reflektiert zu werden. Dieser Teil bildet dann den Signalstrahl der Denisyukanordnung.

Die Interferenz von Signal- und Referenzstrahl in P erzeugt das Hologramm im holographischen Medium. O besteht aus einer mit weißem Papier bedeckten Metallplatte, wobei die Papierseite P zugewandt ist. Auf dem Papier befindet sich ein quadratisches Raster erzeugt durch schwarze Linien. Die Kantenlänge eines Quadrates beträgt 0,5 cm. Dieses Raster wird bei der holographischen Belichtung von P mit im Hologramm abgebildet.

Die mittlere Belichtungsdosis $E_{ave}$ wird durch die Öffnungszeit $t$ von S eingestellt. Bei fixierter Laserleistung $I$ stellt $t$ daher die zu $E_{ave}$ proportionale Größe dar. Da der aufgeweitete Laserstrahl eine inhomogenene (glockenförmige) Intensitätsverteilung besitzt variiert die lokale Dosis $E$ zur Erzeugung des Hologramms in P. Dies führt, zusammen mit der Schrägstellung von P und O zur optischen Achse dazu, dass das geschriebene Hologramm elliptische Form besitzt, wie in Fig. 11 dargestellt.

Da es sich bei O um einen diffusen Reflektor handelt ist das Hologramm durch Beleuchten mit einer Punktlichtquelle (z. B. Taschenlampe oder LED-Leuchte) leicht zu rekonstruieren.

**Herstellung der ID-Karten nach Variante 1:**

Die Hologramme werden nebeneinander auf einen Bogen von ca. DIN A4 Größe (je nach Größe bis zu 48 Hologramme) platziert.

Gleichgroße Bögen aus Folie 1 und Folie 2 wurden bereitgestellt.

Die Folien wurden in folgender Reihenfolge von oben nach unten gestapelt:

- Photopolymerfilm mit der Photopolymerschicht zu Folie 1 gerichtet.
- Folie 1
- Folie 2

Der o.a. Folienstapel wurde anschließend mittels thermischem Punktschweißen an den 4 Ecken der Folienbögen fixiert.

Als nächstes wurden alle Hologramme auf dem Folienbogen mit der gleichen Schweißmethode an einen oder zwei Punkten, bevorzugt außerhalb des sichtbaren Hologramms, fixiert.

Dann wurden die dreilagigen Folienpakete mittels Kiss-Cutting geschnitten. Dabei wurde von der Seite der Hologramme gestanzt, bis auf die Lage der Folie 2. Die nicht fixierten Teile von Hologrammen und Folie 1 wurden als zusammenhängendes Netz entfernt. Dabei verblieb Folie 2 mit den regelmäßig angeordneten Hologrammen und Stücken von Folie 1, welche auf Folie 2 fixiert sind.

Anschließend wurde der endgültige Aufbau der ID-Karte zusammengelegt (von oben nach unten):

Folie 3
Folie 2 mit fixierten Hologrammen und Teilstücken von Folie 1
Folie 2 als Ersatz des Kernmaterials der Karte
Folie 3

Der Folienaufbau wurde nun unter den folgenden Laminierparametern an einer Kartenpresse der Firma Bürckle, Modell LA63 laminiert:

Presse vorgeheizt auf 175 °C.
Einlegen der Folien.
Heizen unter Druck: 8 Minuten, 15 $N/cm^2$
Heizen unter Druck: 2 Minuten, 240 $N/cm^2$
Kühlen unter Druck: 15 Minuten 240 $N/cm^2$
Entnahme der Folien.

Nach dem Laminieren wurden die Karten aus dem Bogen ausgestanzt.

**Herstellung der ID-Karten nach Variante 2:**

Die Hologramme werden nebeneinander auf einen Bogen von ca. DIN A4 Größe (je nach Größe bis zu 48 Hologramme) platziert.

Gleichgroße Bögen aus Folie 1 wurden bereitgestellt.

Die Folien wurden in folgender Reihenfolge gestapelt:

- Hologramme mit der Photopolymerschicht zur Folie 1 gerichtet.

- Folie 1

Der o.a. Folienstapel wurde anschließend mittels thermischem Punktschweißen an den 4 Ecken der Folienbögen fixiert.

Als nächstes wurden die zweilagigen Folienpakete mittels Bandstahlschnitt gestanzt. Dabei entstanden Durchbrüche in den dunklen Bereichen der Hologramme und in den entsprechenden Bereichen der Folie 1. An diesen Stellen konnte sich später beim Laminieren des ID-Kartenkörpers das geschmolzene Polycarbonat durchdrücken und den PC zu PC Verbund zustande kommen lassen.

Anschließend wurde der endgültige Aufbau der ID-Karte zusammengelegt (von oben nach unten):

Folie 3
Verbund aus Hologramm und Folie 1
Folie 2 als Ersatz des Kernmaterials der Karte
Folie 3

Der Folienaufbau wurde nun unter den folgenden Laminierparameteren an einer Kartenpresse der Firma Bürckle, Modell LA63 laminiert:

Presse vorgeheizt auf 175 °C.
Einlegen der Folien.
Heizen unter Druck: 8 Minuten, 15 $N/cm^2$
Heizen unter Druck: 2 Minuten, 240 $N/cm^2$
Kühlen unter Druck: 15 Minuten 240 $N/cm^2$
Entnahme der Folien.

Nach dem Laminieren wurden die Karten aus dem Bogen ausgestanzt.

## Patentansprüche

1. Sicherheits- und/oder Wertdokument umfassend, wenigstens eine Schicht (A1) enthaltend wenigstens ein Poly- oder Copolycarbonat, wenigstens eine weitere Schicht (A2) enthaltend wenigstens ein Poly- oder Copolycarbonat und wenigstens eine Schicht (P) enthaltend wenigstens ein Photopolymer, in die ein Hologramm eingebracht ist, wobei die Schicht (P) teilflächig zwischen den Schichten A1 und A2 angeordnet ist und die Schichten A1 und A2, von denen wenigstens eine Schicht transparent ausgebildet ist, zumindest abschnittsweise miteinander verbunden sind, **dadurch gekennzeichnet, dass** die Schicht P an verschiedenen Stellen Aussparungen aufweist und die beiden Schichten A1 und A2 an diesen Aussparungen zumindest abschnittsweise verbunden sind.

2. Sicherheits- und/oder Wertdokument gemäß Anspruch 1, **dadurch gekennzeichnet, dass** es wenigstens eine Schicht (K) aufweist, die wenigstens einen Kleber enthält.

3. Sicherheits- und/oder Wertdokument gemäß Anspruch 2, **dadurch gekennzeichnet, dass** es sich bei dem Kleber in Schicht K um wenigstens einen Schmelzkleber, bevorzugt um wenigstens einen Schmelzkleber ausgewählt aus thermoplastischem Polyurethan, Polyamid, Polyolefin oder Copolyester, besonders bevorzugt um wenigstens einen Schmelzkleber ausgewählt aus thermoplastischem Polyurethan oder Copolyester handelt.

4. Sicherheits- und/oder Wertdokument gemäß Anspruch 2 oder 3, **dadurch gekennzeichnet, dass** es sich bei dem Kleber in Schicht K um wenigstens einen Schmelzkleber ausgewählt aus thermoplastischen Polyurethanen handelt.

5. Sicherheits- und/oder Wertdokument gemäß wenigstens einem der Ansprüche 1 bis 4, **dadurch gekennzeichnet, dass** es sich bei dem Hologramm um ein Volumenhologramm handelt.

6. Sicherheits- und/oder Wertdokument gemäß wenigstens einem der Ansprüche 1 bis 5, **dadurch gekennzeichnet, dass** es sich bei dem Photopolymer in der Schicht P um ein solches hergestellt aus einer Photopolymer-Formulierung umfassend eine Polyisocyanat-Komponente, eine isocyanatreaktive Komponente, wenigstens ein Schreibmonomer und wenigstens einen Photoinitiator handelt.

7. Sicherheits- und/oder Wertdokument gemäß Anspruch 6, **dadurch gekennzeichnet, dass** die Photopolymer-Formulierung zusätzlich ein Additiv, bevorzugt Additiv gemäß der allgemeinen Formel (VI)

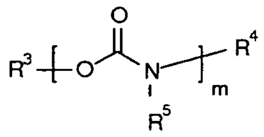

(VI)

umfasst, in der m ≥ 1 und m ≤ 8 ist und $R^3$, $R^4$, $R^5$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^3$, $R^4$, $R^5$ mit wenigstens einem Fluoratom substituiert ist und besonders bevorzugt $R^3$ ein organischer Rest mit mindestens einem Fluoratom ist.

8. Sicherheits- und/oder Wertdokument gemäß Anspruch 6 oder 7, **dadurch gekennzeichnet, dass** das Schreibmonomer in der Photopolymer-Formulierung wenigstens ein monofunktionelles und/oder ein multifunktionelles Urethan(meth)acrylat umfasst.

9. Sicherheits- und/oder Wertdokument gemäß wenigstens einem der Ansprüche 1 bis 8, **dadurch gekennzeichnet, dass** es sich um ein Identifikationsdokument, bevorzugt um eine ID-Karte handelt.

10. Sicherheits- und/oder Wertdokument gemäß wenigstens einem der Ansprüche 1 bis 9, **dadurch gekennzeichnet, dass** sich zwischen der Schicht P und der Schicht A1 oder A2, die gegebenenfalls keinen Kontakt zu der Schicht K aufweist eine Schicht S enthaltend wenigstens ein Poly- oder Copolycarbonat befindet.

11. Verfahren zur Herstellung eines Sicherheits- und/oder Wertdokumentes gemäß wenigstens einem der Ansprüche 2 bis 10, wobei ein Schichtstapel aus wenigstens den Schichten A1, P, A2 und gegebenenfalls K gebildet wird, wobei die Schichten P und gegebenenfalls K sich nur teilflächig zwischen den Schichten A1 und A2 befinden und dieser Schichtstapel anschließend zu einem Sicherheits- und/oder Wertdokument laminiert wird, **dadurch gekennzeichnet, dass** in die Schichten P und gegebenenfalls K vor Bildung des Schichtstapels Aussparungen gestanzt werden.

12. Verfahren gemäß Anspruch 11, **dadurch gekennzeichnet, dass** die Schicht P auf eine Substratschicht S enthaltend wenigstens ein Poly- oder Copolycarbonat aufgebracht wird und im Schichtstapel eine der beiden Schichten A1 oder A2 teilflächig mit der Schicht K verbunden wird und die andere der beiden Schichten A1 oder A2 zumindest abschnittsweise mit der Substratschicht S verbunden werden.

## Claims

1. Document of security and/or value, comprising at least one layer (A1) comprising at least one polycarbonate or copolycarbonate, at least one further layer (A2) comprising at least one polycarbonate or copolycarbonate, and at least one layer (P) comprising at least one photopolymer and incorporating a hologram, wherein the layer (P) is arranged over a partial area between layers A1 and A2, and the layers A1 and A2, of which at least one layer is of transparent design, are joined at least sectionally to one another, **characterized in that** at various locations the layer P has recesses, and the two layers A1 and A2 are at least sectionally joined at these recesses.

2. Document of security and/or value according to Claim 1, **characterized in that** it has at least one layer (K) which comprises at least one adhesive.

3. Document of security and/or value according to Claim 2, **characterized in that** the adhesive in layer K comprises at least one hotmelt adhesive, preferably at least one hotmelt adhesive selected from thermoplastic polyurethane, polyamide, polyolefin or copolyester, more preferably at least one hotmelt adhesive selected from thermoplastic polyurethane or copolyester.

**4.** Document of security and/or value according to Claim 2 or 3, **characterized in that** the adhesive in layer K comprises at least one hotmelt adhesive selected from thermoplastic polyurethanes.

**5.** Document of security and/or value according to at least one of Claims 1 to 4, **characterized in that** the hologram is a volume hologram.

**6.** Document of security and/or value according to at least one of Claims 1 to 5, **characterized in that** the photopolymer in the layer P is one prepared from a photopolymer formulation comprising a polyisocyanate component, an isocyanate-reactive component, at least one writing monomer and at least one photoinitiator.

**7.** Document of security and/or value according to Claim 6, **characterized in that** the photopolymer formulation further comprises an additive, preferably an additive according to the general formula (VI)

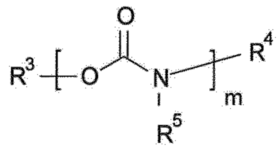

(VI)

in which $m \geq 1$ and $m \leq 8$ and $R^3$, $R^4$ and $R^5$ independently of one another are hydrogen or are linear, branched, cyclic or heterocyclic organic radicals which are unsubstituted or else optionally substituted by heteroatoms, at least one of the radicals $R^3$, $R^4$ and $R^5$ preferably being substituted by at least one fluorine atom, and $R^3$ more preferably being an organic radical having at least one fluorine atom.

**8.** Document of security and/or value according to Claim 6 or 7, **characterized in that** the writing monomer in the photopolymer formulation comprises at least one monofunctional and/or one polyfunctional urethane (meth)acrylate.

**9.** Document of security and/or value according to at least one of Claims 1 to 8, **characterized in that** it is a document of identification, preferably an ID card.

**10.** Document of security and/or value according to at least one of Claims 1 to 9, **characterized in that** a layer S comprising at least one polycarbonate or copolycarbonate is located between the layer P and the layer A1 or A2, which optionally has no contact to the layer K.

**11.** Method for producing a document of security and/or value according to at least one of Claims 2 to 10, wherein a layer stack of at least the layers A1, P, A2, and optionally K is formed, the layers P and optionally K being located only over a partial area between the layers A1 and A2, and this layer stack is subsequently laminated to form a document of security and/or value, **characterized in that** recesses are punched into the layers P and optionally K before the layer stack is formed.

**12.** Method according to Claim 11, **characterized in that** the layer P is applied to a substrate layer S comprising at least one polycarbonate or copolycarbonate and in the layer stack, one of the two layers, A1 or A2, is joined over a partial area to the layer K, and the other of the two layers, A1 or A2, is joined at least sectionally to the substrate layer S.

**Revendications**

**1.** Document de sécurité et/ou de valeur, comprenant au moins une couche (A1) contenant au moins un poly- ou copolycarbonate, au moins une autre couche (A2) contenant au moins un poly- ou copolycarbonate, et au moins une couche (P) contenant au moins un photopolymère dans lequel un hologramme est incorporé, la couche (P) étant agencée en partie entre les couches A1 et A2, et les couches A1 et A2, parmi lesquelles au moins une couche est configurée sous forme transparente, étant reliées au moins en sections l'une avec l'autre, **caractérisé en ce que** la couche P comprend des évidements à différents emplacements, et les deux couches A1 et A2 sont reliées

au moins en sections au niveau de ces évidements.

2. Document de sécurité et/ou de valeur selon la revendication 1, **caractérisé en ce qu'**il comprend au moins une couche (K) qui contient au moins une colle.

3. Document de sécurité et/ou de valeur selon la revendication 2, **caractérisé en ce que** la colle dans la couche K consiste en au moins une colle thermofusible, de préférence en au moins une colle thermofusible choisie parmi un polyuréthane thermoplastique, un polyamide, une polyoléfine ou un copolyester, de manière particulièrement préférée en au moins une colle thermofusible choisie parmi un polyuréthane thermoplastique ou un copolyester.

4. Document de sécurité et/ou de valeur selon la revendication 2 ou 3, **caractérisé en ce que** la colle dans la couche K consiste en au moins une colle thermofusible choisie parmi les polyuréthanes thermoplastiques.

5. Document de sécurité et/ou de valeur selon au moins l'une quelconque des revendications 1 à 4, **caractérisé en ce que** l'hologramme consiste en un hologramme en volume.

6. Document de sécurité et/ou de valeur selon au moins l'une quelconque des revendications 1 à 5, **caractérisé en ce que** le photopolymère dans la couche P consiste en un photopolymère fabriqué à partir d'une formulation de photopolymère comprenant un composant polyisocyanate, un composant réactif avec les isocyanates, au moins un monomère d'écriture et au moins un photoinitiateur.

7. Document de sécurité et/ou de valeur selon la revendication 6, **caractérisé en ce que** la formulation de photopolymère comprend en outre un additif, de préférence un additif selon la formule générale (VI)

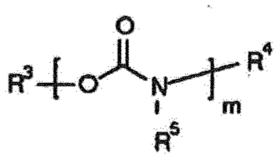

(VI)

dans laquelle $m \geq 1$ et $m \leq 8$, et $R^3$, $R^4$, $R^5$ représentent indépendamment les uns des autres l'hydrogène, des radicaux organiques linéaires, ramifiés, cycliques ou hétérocycliques, non substitués ou éventuellement également substitués avec des hétéroatomes, au moins un des radicaux $R^3$, $R^4$, $R^5$ étant de préférence substitué avec au moins un atome de fluor et $R^3$ étant de manière particulièrement préférée un radical organique comprenant au moins un atome de fluor.

8. Document de sécurité et/ou de valeur selon la revendication 6 ou 7, **caractérisé en ce que** le monomère d'écriture dans la formulation de photopolymère comprend au moins un (méth)acrylate d'uréthane monofonctionnel et/ou multifonctionnel.

9. Document de sécurité et/ou de valeur selon au moins l'une quelconque des revendications 1 à 8, **caractérisé en ce qu'**il s'agit d'un document d'identification, de préférence d'une carte d'identité.

10. Document de sécurité et/ou de valeur selon au moins l'une quelconque des revendications 1 à 9, **caractérisé en ce qu'**une couche S contenant au moins un poly- ou copolycarbonate se trouve entre la couche P et la couche A1 ou A2, qui ne présente éventuellement pas de contact avec la couche K.

11. Procédé de fabrication d'un document de sécurité et/ou de valeur selon au moins l'une quelconque des revendications 2 à 10, dans lequel un empilement de couches constitué d'au moins les couches A1, P, A2 et éventuellement K est formé, les couches P et éventuellement K ne se trouvant qu'en partie entre les couches A1 et A2, et cet empilement de couches est ensuite stratifié en un document de sécurité et/ou de valeur, **caractérisé en ce que** des évidements sont poinçonnés dans les couches P et éventuellement K avant la formation de l'empilement de couches.

12. Procédé selon la revendication 11, **caractérisé en ce que** la couche P est appliquée sur une couche substrat S

contenant au moins un poly- ou copolycarbonate et, dans l'empilement de couches, une des deux couches A1 ou A2 est reliée en partie avec la couche K et l'autre des deux couches A1 ou A2 est reliée au moins en sections avec la couche substrat S.

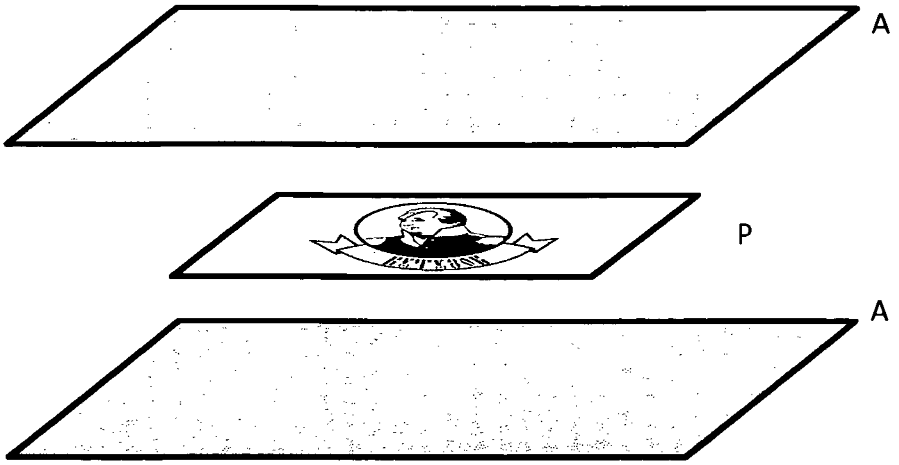


Fig. 1 zeigt eine schematische Darstellung eines ersten erfindungsgemäßen Sicherheits- oder Wertdokuments;

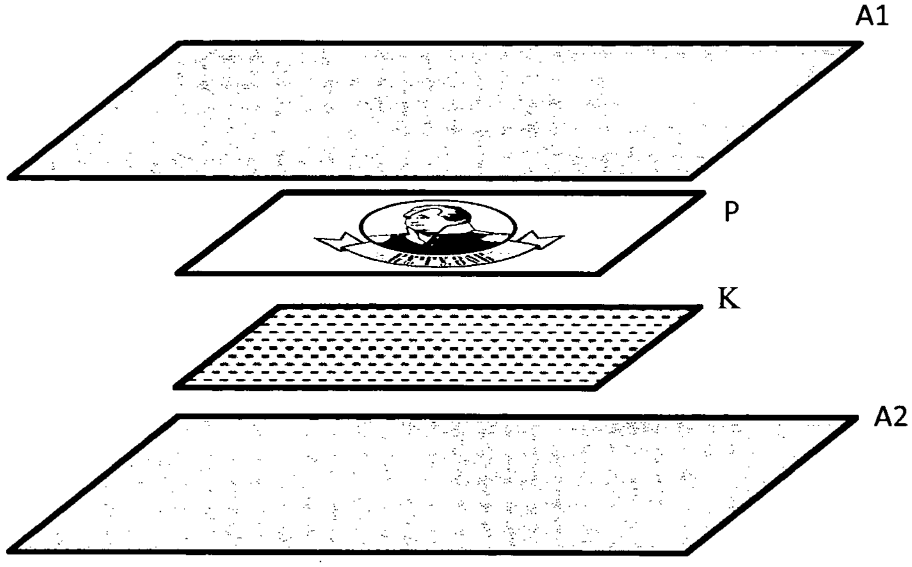


**Fig. 2**

Fig. 2 zeigt eine schematische Darstellung eines zweiten erfindungsgemäßen Sicherheits- oder Wertdokuments;

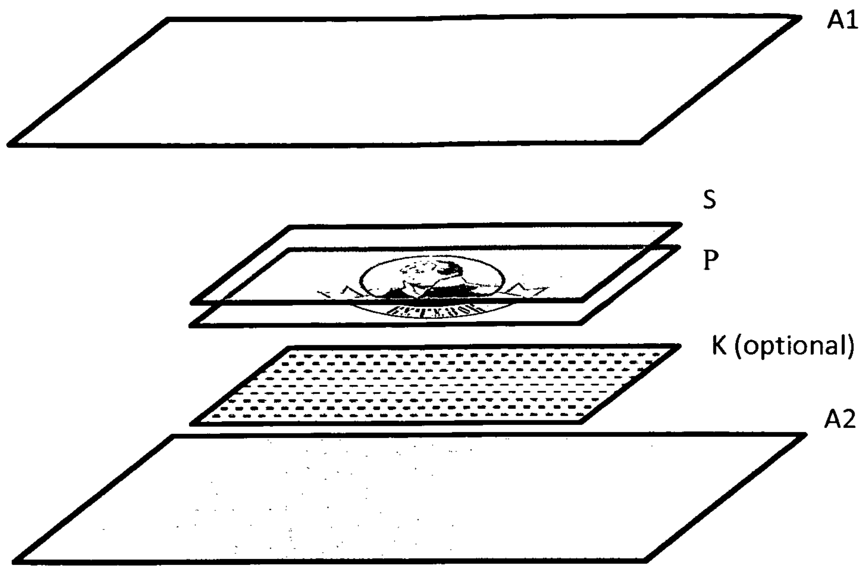


**Fig. 3**

Fig. 3 eine schematische Darstellung eines dritten erfindungsgemäßen Sicherheits- oder Wertdokuments;

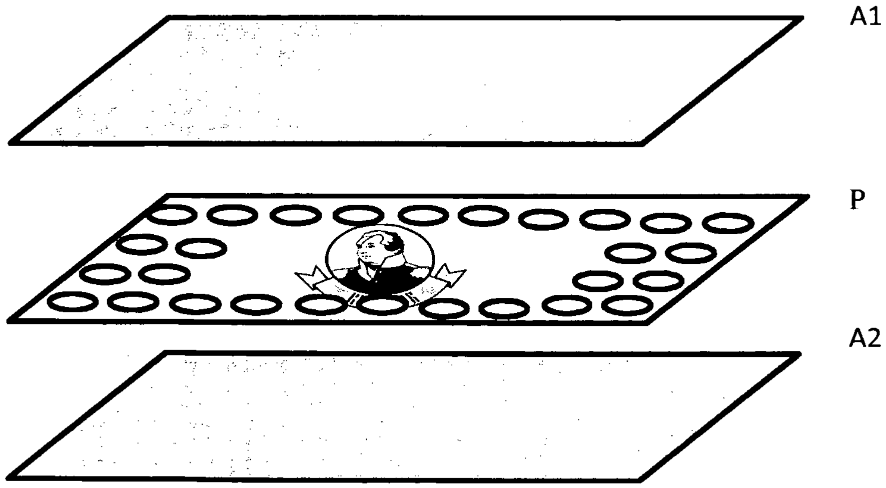


**Fig. 4**

Fig. 4 eine schematische Darstellung eines vierten erfindungsgemäßen Sicherheits- oder Wertdokuments;

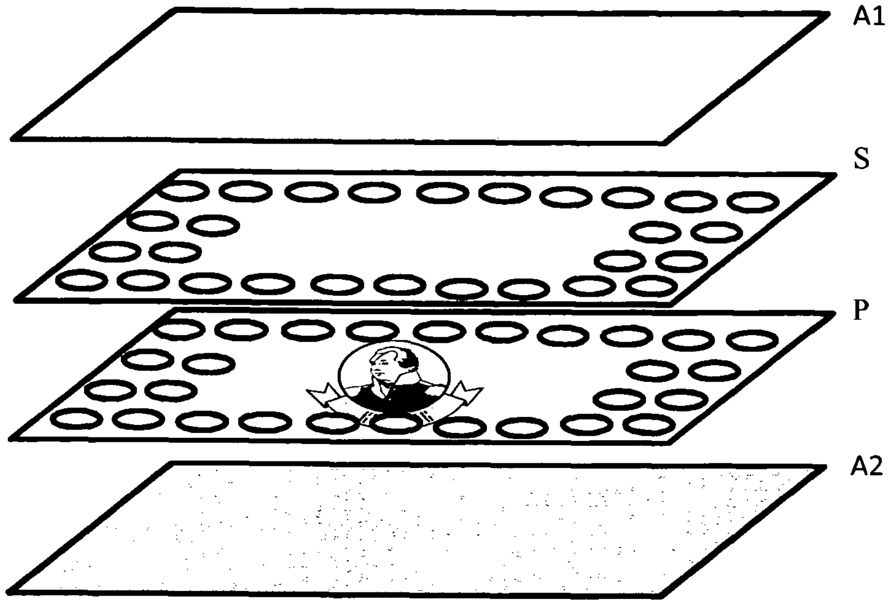


Fig. 5

Fig. 5 eine schematische Darstellung eines fünften erfindungsgemäßen Sicherheits- oder Wertdokuments;

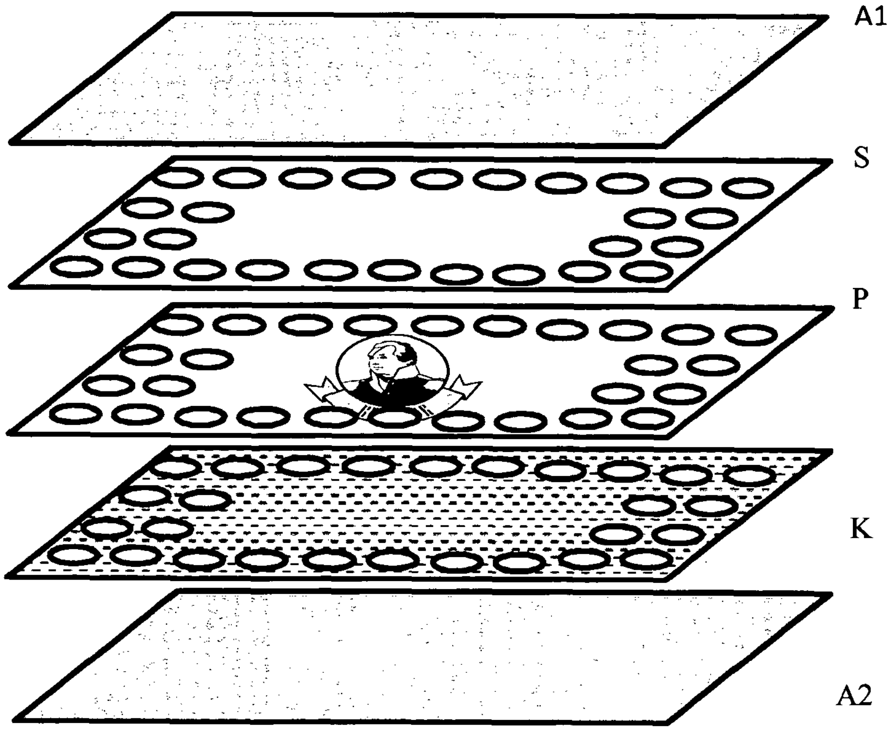


Fig. 6

Fig. 6 eine schematische Darstellung eines sechsten erfindungsgemäßen Sicherheits- oder Wertdokuments;

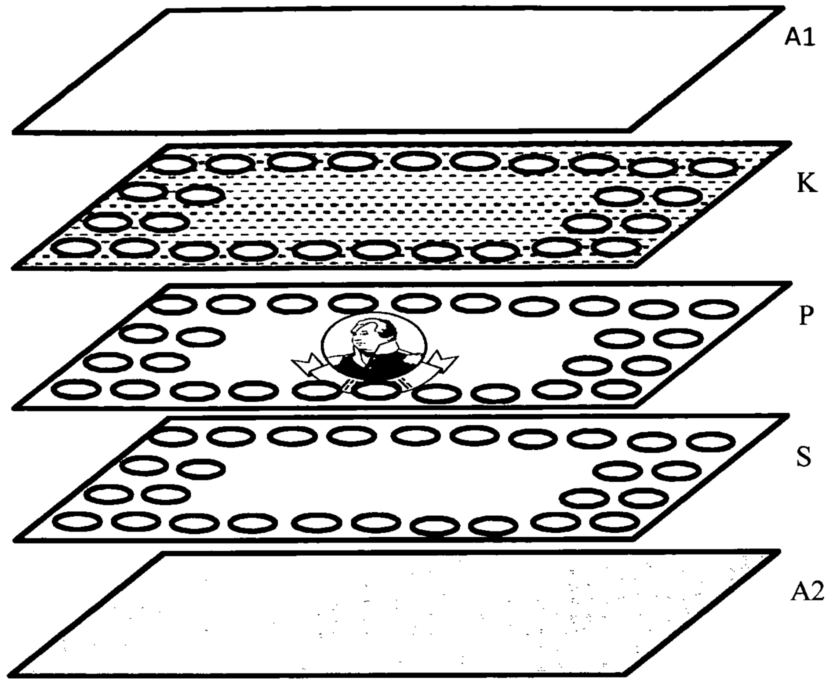


Fig. 7

Fig. 7 eine schematische Darstellung eines siebten erfindungsgemäßen Sicherheits- oder Wertdokuments;

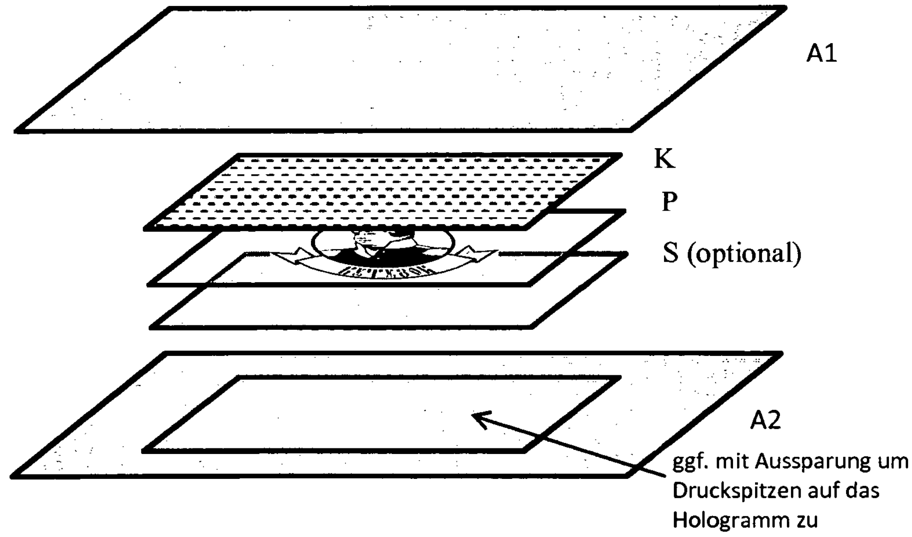


Fig. 8

Fig. 8 eine schematische Darstellung eines achten erfindungsgemäßen Sicherheits- oder Wertdokuments;

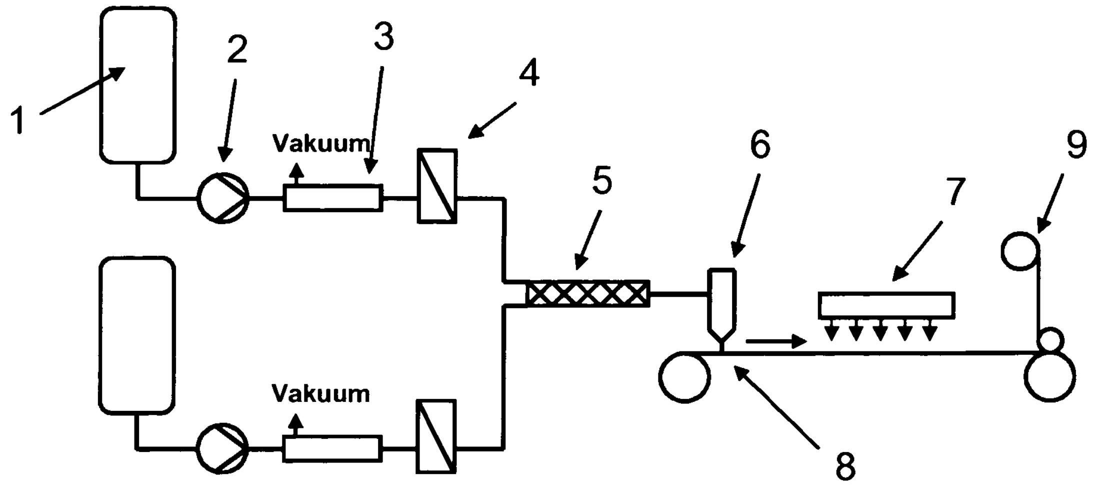


**Fig. 9**

Fig. 9 zeigt schematisch den Aufbau der Folienbeschichtungsanlage zur Herstellung der Photopolymerfilme.

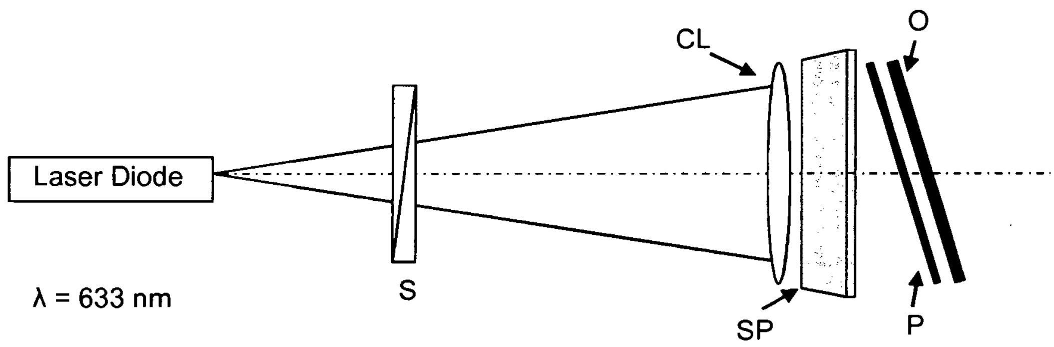


**Fig. 10**

Figur 10 zeigt die Apparatur zur Erzeugung eines Hologramms in der Photopolymerschicht für eine Belichtungswellenlängen von 633 nm (rot).

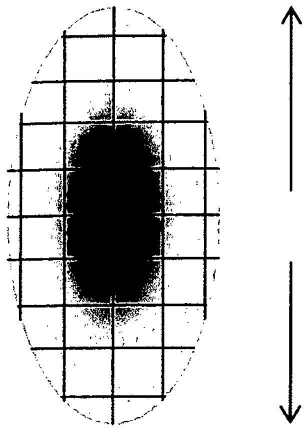

Fig. 11

Figur 11 zeigt die elliptische Form eines unter Figur 10 geschriebenen Hologramms.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011054797 A
- WO 2011067057 A
- DE 102004012787 A1
- DE 102006048464 A1
- WO 2008043356 A1
- WO 2012019588 A
- DE 102007052948
- EP 2172503 A1
- EP 0223587 A
- GB 1057018 A
- DE 1964834 A
- DE 2901774 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P. R. MÜLLER ; H. NOUVERTNE ; BAYER AG.** Encyclopedia of Polymer Science and Engineering. 1988, vol. 11, 648-718
- Polycarbonate. **U. GRIGO ; K. KIRCHNER ; P. R. MÜLLER.** Becker/Braun, Kunststoff-Handbuch, Band 3/1, Polycarbonate, Polyacetale, Polyester, Celluloseester. Carl Hanser Verlag, 1992, vol. 3-1, 117-299
- **CUNNINGHAM et al.** *RadTech'98 North America UV/EB Conference Proceedings, Chicago,* 19. April 1998
- **KUTAL et al.** *Macromolecules,* 1991, vol. 24, 6872
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings , Inks & Paints. Chemistry & Technology of UV & EB Formulations For Coatings, Inks & Paints. SITA Technology, 1991, vol. 3, 61-328
- **H. BERNETH.** Ullmann's Encyclopedia of Industrial Chemistry, Cationic Dyes. Wiley-VCH Verlag, 2008
- **H. BERNETH.** Ullmann's Encyclopedia of Industrial Chemistry, Azine Dyes. Wiley-VCH Verlag, 2008
- **H. BERNETH.** Ullmann's Encyclopedia of Industrial Chemistry, Methine Dyes and Pigments. Wiley-VCH Verlag, 2008
- **T. GESSNER ; U. MAYER.** Ullmann's Encyclopedia of Industrial Chemistry, Triarylmethane and Diarylmethane Dyes. Wiley-VCH Verlag, 2000
- *J. Comput. Aid. Mol. Des.,* 2005, vol. 19, 453
- *Virtual Computational Chemistry Laboratory, http://www.vcclab.org berechnet*
- Methoden der organischen Chemie. **HOUBEN-WEYL.** Makromolekulare Stoffe. Georg Thieme Verlag, 1987, vol. E20, 1587-1593
- *Justus Liebigs Annalen der Chemie,* vol. 562, 75-136
- High Polymers. **J.H. SAUNDERS ; K.C. FRISCH.** Polyurethane. Verlag Interscience Publishers, 1962, vol. XVI
- **VON R.GÄCHTER U. ; H.MÜLLER.** Taschenbuch für Kunststoff-Additive. Hanser Verlag, 1990